# EUROPEAN PATENT APPLICATION

(11) **EP 4 397 449 A1**
(43) Date of publication of application: **10.07.2024**
(21) Application number: 22864566.9
(22) Date of filing: 30.08.2022
(51) Int. Cl.: B25J 5/00, B25J 9/22, B25J 13/02, G05B 19/42

(54) **OPERATING TERMINAL, ROBOT SYSTEM, AND COMPUTER PROGRAM**

(30) Priority: 31.08.2021 JP 2021141728
(71) Applicant: KAWASAKI JUKOGYO KABUSHIKI KAISHA, Kobe-shi, Hyogo 650-8670 (JP)
(72) Inventor: NAGAHIRO, Ippei, Hyogo 650-8670 (JP); IJICHI, Satoshi, Hyogo 650-8670 (JP); MATSUI, Hiroki, Hyogo 650-8670 (JP); SAKAI, Ryota, Hyogo 650-8670 (JP); MOMOTA, Risa, Hyogo 650-8670 (JP)
(74) Representative: Müller-Boré & Partner Patentanwälte PartG mbB
(86) International application number: PCT/JP2022/032600
(87) International publication number: WO 2023/032984

(57) **Abstract**

An operation terminal (400) for operating a mobile robot (100) performs: receiving an input of a moving operation that is an operation to cause moving equipment (120) included in the robot to perform an action; and outputting, to control equipment (200) that controls an action of the robot, a command to cause the moving equipment to perform the action in accordance with the received moving operation.

## Description

### CROSS-REFERENCE TO RELATED APPLICATION

This application claims priority to and the benefit of Japanese Patent Application No. 2021-141728, filed with the JPO on August 31, 2021, the entire disclosure of which is incorporated herein by reference.

### Technical Field

The present disclosure relates to an operation terminal, a robot system, and a computer program.

### Background Art

For example, Japanese Patent No. 6619398 discloses a machine operation panel with which operations for teaching a robot can be performed. The machine operation panel includes a tablet terminal and an external device connected to the tablet terminal. The external device is connected to a control device of the robot. The tablet terminal communicates with the control device via the external device.

### Summary of Invention

A person to perform a teaching operation with the machine operation panel disclosed in Japanese Patent No. 6619398 is limited to an operator that has received training for the teaching. The present disclosure provides an operation terminal, a robot system, and a computer program that make it possible for various operators to perform an operation to cause a robot to perform a particular action.

An operation terminal according to one aspect of the present disclosure is an operation terminal for operating a mobile robot. The operation terminal performs: receiving an input of a moving operation that is an operation to cause moving equipment included in the robot to perform an action; and outputting, to control equipment that controls an action of the robot, a command to cause the moving equipment to perform the action in accordance with the received moving operation.

### Brief Description of Drawings

FIG. 1 shows one example of the configuration of a robot system according to an embodiment.
FIG. 2 is a block diagram showing one example of hardware configurations of robot control equipment, teaching equipment, and an operation terminal according to the embodiment.
FIG. 3 is a block diagram showing one example of functional configurations of the robot control equipment, the teaching equipment, and the operation terminal according to the embodiment.
FIG. 4 shows one example of a home screen displayed on the operation terminal after a robot operation application is started.
FIG. 5 shows one example of a connection setting screen displayed on the operation terminal.
FIG. 6 shows one example of the connection setting screen displayed on the operation terminal.
FIG. 7 shows a variation of the connection setting screen displayed on the operation terminal.
FIG. 8 shows one example of an action selection screen that is one of playback operation screens to be displayed on the operation terminal.
FIG. 9 shows one example of a robot operation screen that is one of the playback operation screens to be displayed on the operation terminal.
FIG. 10 shows one example of a monitor function screen displayed on the operation terminal.
FIG. 11 shows one example of a moving equipment operation screen displayed on the operation terminal.
FIG. 12 shows one example of a teaching target selection screen that is one of teaching operation screens to be displayed on the operation terminal.
FIG. 13 shows one example of a robot teaching screen displayed on the operation terminal.
FIG. 14 shows one example of a moving equipment teaching screen displayed on the operation terminal.
FIG. 15 shows one example of a manual operation setting screen for a robot body, which is displayed on the operation terminal.
FIG. 16 shows one example of a moving equipment monitor screen for moving equipment, which is displayed on the operation terminal.
FIG. 17 shows one example of a movement width setting screen for the moving equipment, which is displayed on the operation terminal.
FIG. 18 shows one example of a manual operation setting screen for the moving equipment, which is displayed on the operation terminal.
FIG. 19 shows one example of a setting selection screen that is one of setting screens to be displayed on the operation terminal.
FIG. 20 shows one example of an application setting screen that is one of the setting screens to be displayed on the operation terminal.
FIG. 21 shows one example of a robot selection screen that is one of the setting screens to be displayed on the operation terminal.
FIG. 22 shows one example of a robot body setting screen that is one of the setting screens to be displayed on the operation terminal.
FIG. 23 shows one example of an error log screen that is one of the setting screens to be displayed on the operation terminal.
FIG. 24 shows one example of a playback action setting screen for the robot body, which is one of the setting screens to be displayed on the operation terminal.
FIG. 25 shows one example of a moving equipment setting screen that is one of the setting screens to be displayed on the operation terminal.
FIG. 26 shows one example of a playback action setting screen for the moving equipment, which is one of the setting screens to be displayed on the operation terminal.
FIG. 27 shows one example of a management screen that is one of the setting screens to be displayed on the operation terminal.
FIG. 28 shows one example of a data management screen that is one of the setting screens to be displayed on the operation terminal.
FIG. 29 shows one example of the data management screen that is one of the setting screens to be displayed on the operation terminal.
FIG. 30 shows one example of a signal monitor screen that is one of the setting screens to be displayed on the operation terminal.

### Description of Embodiments

Hereinafter, illustrative embodiments of the present disclosure are described with reference to the drawings. All the embodiments described below illustrate comprehensive or specific examples. Among the components in the embodiments below, components that are not recited in the independent claim defining the most generic concept of the present disclosure are described as optional components. Each of the accompanying drawings is a schematic drawing, and is not necessarily an exactly illustrated drawing. In each drawing, substantially the same components are denoted by the same reference signs, and in some cases, redundant descriptions are omitted or simplified. In the present specification and the claims, "an apparatus" or "a device" can mean not only a single apparatus or a single device, but also a system including multiple apparatuses or multiple devices.

### [Configuration of Robot system]

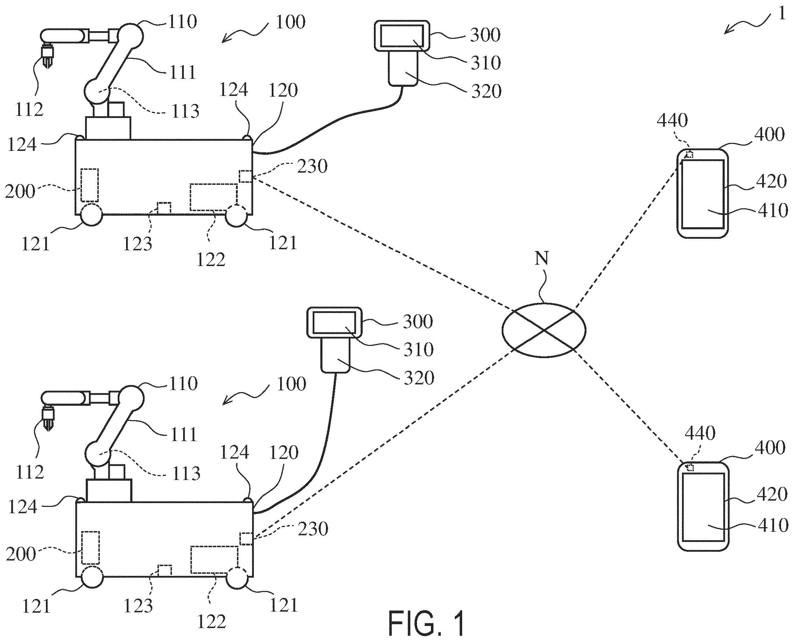

With reference to FIG. 1, the configuration of a robot system 1 according to an illustrative embodiment is described. FIG. 1 shows one example of the configuration of the robot system 1 according to the embodiment. The robot system 1 includes at least one robot 100, at least one piece of robot control equipment 200, at least one piece of teaching equipment 300, and at least one operation terminal 400.

The number of robots 100 is the same as the number of pieces of robot control equipment 200. The number of pieces of teaching equipment 300 and the number of operation terminals 400 may each be the same as, greater than, or less than the number of pieces of robot control equipment 200.

The robot control equipment 200 is mounted in the robot 100, and controls actions of the robot 100. However, as an alternative, the robot control equipment 200 may be located at a position away from the robot 100, and may be connected to the robot 100 via wired connection, or via wireless communication, or via a combination of wireless communication and wired communication. The teaching equipment 300 is connected to the robot control equipment 200 of one robot 100 that is a teaching target. In the present embodiment, the teaching equipment 300 is wire-connected to the robot 100. Alternatively, the teaching equipment 300 may be connected to the robot 100 via wireless communication or via a combination of wireless communication and wired communication. The operation terminal 400 is connected to the robot control equipment 200 of one robot 100 that is to be operated. In the present embodiment, the operation terminal 400 is connected to the robot control equipment 200 via wireless communication. Alternatively, the operation terminal 400 may be connected to the robot control equipment 200 via wired communication or via a combination of wired communication and wireless communication.

Although the wireless communication used for the operation terminal 400 is not particularly limited, a wireless communication network N is used in the present embodiment. Although the wireless communication network N is not particularly limited, it may use a wireless LAN (Local Area Network) such as WiFi (Wireless Fidelity), a wireless WAN (Wide Area Network) utilizing a mobile communication network or the like, satellite communication, short-distance wireless communication such as Bluetooth (registered trademark) or ZigBee (registered trademark), or a combination of two or more of these. The mobile communication network may be one that uses, for example, a fourth-generation mobile communication system or a fifth-generation mobile communication system. In the present embodiment, the wireless communication network N is a wireless LAN. For the wired connection, direct interconnection by cables or the like, a wired communication network, or a combination of these may be used. The wired communication network may be any type of network.

The robot 100 is a self-traveling mobile robot, and includes a robot body 110 and moving equipment 120. However, the robot 100 need not include the moving equipment 120. In the present embodiment, the robot body 110 includes a robotic arm 111 including at least one joint and an end effector 112 mounted to the distal end of the robotic arm 111. The robotic arm 111 can freely shift the position and orientation of the end effector 112. The end effector 112 includes a structure that can act on a workpiece in accordance with a particular purpose. The robotic arm 111 includes at least one servomotor 113 serving as a driver to cause at least one movable part to move. The end effector 112 may include at least one servomotor 113 serving as a driver to cause a movable part to move.

The moving equipment 120 can move with the robot body 110 mounted thereon.

In the present embodiment, the moving equipment 120 can travel on a supporting surface, such as a floor surface or the ground, and includes wheels 121 for traveling. The moving equipment 120 includes at least one servomotor 122 serving as a driver to drive the rotation of the wheels 121. The moving equipment 120 may include a structure that can perform other actions, such as lifting/lowering, flying, navigating on water, and traveling underwater.

The moving equipment 120 may include a position detector 123, which detects the position of the moving equipment 120. It will suffice if the position detector 123 can detect an absolute position or relative position of the moving equipment 120 within a three-dimensional space or on a two-dimensional plane. Examples of the position detector 123 to detect the absolute position may include a GNSS (Global Navigation Satellite System), an accelerometer, an angular velocity sensor, and a measurement device including two or more of these.

Examples of the position detector 123 to detect the relative position may include devices that use magnetism, light wave, ultrasonic wave, laser, camera image, or a combination of two or more of these. Such a position detector 123 can detect the position of the moving equipment 120 relative to the surrounding environment by using magnetism, light wave, ultrasonic wave, laser, camera image, or a combination of two or more of these. In the present embodiment, the position detector 123 is a device that uses magnetism, and can detect the position of a magnetic material on a supporting surface such as a floor surface. For example, the position detector 123 detects the position of a magnetic material line, such as a magnetic tape affixed to the supporting surface. By using a result of the detection by the position detector 123, the robot control equipment 200 causes the moving equipment 120 to travel along the magnetic material line.

The moving equipment 120 may include at least one light source 124. In the present embodiment, four light sources 124 are located at four corners of the exterior of the moving equipment 120, the exterior being in the shape of a rectangular parallelepiped, such that the four light sources 124 are exposed from the exterior. However, the light sources 124 may be located at any positions on the robot 100, so long as the light sources 124 are visible from the outside of the robot 100. Each light source 124 is supplied with electric power and emits light, and may include, for example, a LED (Light-Emitting Diode). Turning on and off of the light source 124 may be controlled by the robot control equipment 200. The moving equipment 120 may include a storage battery as an electric power source, and may include a structure that is supplied with electric power from an external electric power source, such as a commercial power supply.

The robot control equipment 200 controls actions of the robot 100 in accordance with commands received from the teaching equipment 300 and the operation terminal 400. For example, the robot control equipment 200 controls the action of the servomotor 113 of each of the robotic arm 111 and the end effector 112 of the robot body 110 as well as the action of the servomotor 122 of the moving equipment 120. The robot control equipment 200 generates and outputs commands to cause the actions of the servomotors 113 and 122, and controls electric currents supplied to the servomotors 113 and 122. The robot control equipment 200 includes a computer and drive circuitry. As a non-limiting example, in the present embodiment, the robot control equipment 200 can operate in two operation modes that are a teaching mode and a playback mode, and selectively executes one of the two operation modes.

The teaching mode is an operation mode to teach the robot control equipment 200 a program for causing the robot 100 to perform a predetermined action. For example, the predetermined action may be an action that relates to work to be performed by the robot 100. For example, teaching data, i.e., data used by the program, may be taught to the robot control equipment 200. The teaching data may be data containing, for example, the positions, orientations, and torques, i.e., generated forces, of the movable parts of the robotic arm 111 and the end effector 112, and the position and orientation of the moving equipment 120, during the predetermined action being performed.

In the teaching mode, teaching may be performed by using the teaching equipment 300, the operation terminal 400, or both the teaching equipment 300 and the operation terminal 400. For example, an operator may operate the teaching equipment 300 or the operation terminal 400, thereby causing the robot control equipment 200 to cause the robot 100 to perform an action, and action data obtained in the course of the action may be stored in the robot control equipment 200 as teaching data. In this manner, teaching of the action may be performed. The teaching method may be any existing teaching method. In the present embodiment, the teaching equipment 300 is configured such that it is used for teaching to the robotic arm 111 and the end effector 112, and the operation terminal 400 is configured such that it is used for teaching to the moving equipment 120. However, as an alternative, the teaching equipment 300 may be configured such that it is used for teaching to the moving equipment 120, and the operation terminal 400 may be configured such that it is used for teaching to the robotic arm 111 and the end effector 112.

In the teaching mode, the teaching equipment 300 and the operation terminal 400 generate operation commands for causing the robot 100 to perform actions in accordance with manual operations inputted to the teaching equipment 300 and the operation terminal 400, and output the generated operation commands to the robot control equipment 200. The robot control equipment 200 controls actions of the robot 100, such that the robot 100 acts in accordance with the operation commands.

The playback mode is an operation mode to cause the robot 100 to perform an action that has been taught. In the playback mode, the robot control equipment 200 causes the robot 100 to autonomously perform a predetermined action in accordance with a program that has been taught. The robot control equipment 200 uses teaching data to control actions of the robot 100, such that the robot 100 acts in accordance with the teaching data.

The teaching equipment 300 receives an input made by an operator, and in accordance with the input content, outputs a command, information, data, etc. to the robot control equipment 200. In the present embodiment, the teaching equipment 300 is a teaching terminal that can be operated by the operator in a handheld manner, and the teaching equipment 300 is, for example, a teaching pendant. However, it will suffice if the teaching equipment 300 is a device that can perform teaching to the robot 100. For example, the teaching equipment 300 may be a different apparatus including a computer, such as a personal computer. In the present embodiment, the teaching equipment 300 is an existing general-purpose teaching pendant. Alternatively, the teaching equipment 300 may be a teaching pendant that is designed and dedicated for the robot system 1. The teaching equipment 300 includes a display 310 and an inputter 320. The display 310 displays an image for operating the teaching equipment 300. The display 310 may be a touch panel that receives an input made by a touch on its screen. The inputter 320 receives an input made by the operator, and converts the input content into a signal. The inputter 320 is, for example, a device that receives an input via an operation by the operator. Examples of such a device include a button, a lever, a dial, a joystick, and a key. The teaching equipment 300 outputs, to the robot control equipment 200, a signal generated by the inputter 320, or a signal processed from the generated signal. In the present embodiment, the teaching equipment 300 includes no computer. Alternatively, the teaching equipment 300 may include a computer.

For example, when the teaching equipment 300 receives, via the inputter 320, a command to perform teaching or playback, the teaching equipment 300 outputs a command to perform teaching or playback to the robot control equipment 200. In the case of teaching, the teaching equipment 300 receives a manual operation performed by the operator, and outputs an operation command corresponding to the manual operation to the robot control equipment 200, thereby causing the robot 100 to perform an action in accordance with the manual operation. As a non-limiting example, in the present embodiment, the teaching equipment 300 receives manual operations for the robotic arm 111 and the end effector 112. The teaching equipment 300 stores data of the performed action in the robot control equipment 200 as teaching data.

In the case of playback, the teaching equipment 300 receives an input, made by the operator, of a command to perform playback, and outputs, to the robot control equipment 200, a command to execute, i.e., play back a predetermined action that has been taught and that is specified by the operator. As a non-limiting example, in the present embodiment, the teaching equipment 300 receives a command to perform playback for the entire robot 100 including the robot body 110 and the moving equipment 120. During the playback of the predetermined action, if the teaching equipment 300 receives a command to perform teaching, the teaching equipment 300 causes the robot control equipment 200 to shift to the teaching mode.

The operation terminal 400 receives an input made by the operator, and in accordance with the input content, outputs a command, information, data, etc. to the robot control equipment 200. The operation terminal 400 includes a computer. The operation terminal 400 includes an inputter 410 and a presenter 420. The inputter 410 receives an input made by the operator, converts the input content into a signal, and outputs the signal to the computer of the operation terminal 400. The inputter 410 is, for example, a device that receives an input via an operation by the operator. Examples of such a device include a button, a lever, a dial, a joystick, a mouse, a key, a touch panel, and a motion capture device. The inputter 410 may include a camera to capture an image of the operator or the like, a microphone to receive an input of a voice of the operator or the like, or both the camera and the microphone. The inputter 410 may output, to the computer of the operation terminal 400, signals indicating the captured image data and the inputted voice.

The presenter 420 includes a structure that presents information or the like to the operator. The presenter 420 may include a structure that presents information or the like by outputting light, a sound, an image, tactile information such as a vibration and a load, a temperature, or a combination of two or more of these. As a non-limiting example, in the present embodiment, the presenter 420 includes a display to output an image and a speaker to output a sound. Further, the display is a touch panel.

As a non-limiting example, in the present embodiment, the operation terminal 400 is a portable terminal that can be carried around by the operator. Examples of the operation terminal 400 include smart devices such as a smartphone, a smart watch, and a tablet. The operation terminal 400 may be a smart device developed and dedicated for the robot system 1. However, in the present embodiment, the operation terminal 400 is a general-purpose smart device that is available on the market. For example, a computer program that realizes the functionality of the operation terminal 400 disclosed in the present specification and the claims may be incorporated in a general-purpose smart device, and as a result, the general-purpose smart device can function as the operation terminal 400.

The computer program incorporated in the operation terminal 400 may be an application program. Hereinafter, the application program is also referred to as a "robot operation application program". The robot operation application program may be a native application that is installed and runs on an OS (Operating System) that is system software of the operation terminal 400. The robot operation application program may be a web application that runs on a web browser to which the operation terminal 400 connects, or may be a hybrid application that runs on the operation terminal 400 and that utilizes a web environment for part of processing, such as for operations using data.

The operation terminal 400 may be any device into which a computer program realizing the functionality of the operation terminal 400 disclosed in the present specification and the claims can be incorporated and which can receive an input of an operation that the operation terminal 400 is required to receive. For example, the operation terminal 400 may be a combination of a personal computer and a display, a laptop personal computer, a combination of a game console and a display, or a PDA (Personal Digital Assistant).

The operation terminal 400 is communicably connected to the robot control equipment 200. In the present embodiment, the operation terminal 400 is connected to the robot control equipment 200 via a communication path different from the teaching equipment 300. However, this is a non-limiting example. The operation terminal 400 may be communicably connected to the teaching equipment 300, and may be connected to the robot control equipment 200 via the teaching equipment 300.

The operation terminal 400 is configured to operate the robot 100. The operation terminal 400 may be configured to operate only the robot body 110, only the moving equipment 120, or both the robot body 110 and the moving equipment 120. The operation terminal 400 may be configured to operate the robot 100 only in the teaching mode, only in the playback mode, or in both the teaching mode and the playback mode. In the present embodiment, in the teaching mode, the operation terminal 400 can operate the moving equipment 120, whereas in the playback mode, the operation terminal 400 can cause the entire robot 100 to play back a predetermined action that has been taught.

The operation terminal 400 may be configured to be connected to the robot control equipment 200, alternatively with the teaching equipment 300, together with the teaching equipment 300 in parallel, or in series via the teaching equipment 300. These ways of connection indicate that these devices are in the state of being communicable with each other, such that commands, information, data, etc. can be transmitted and received to and from each other, and the connection is not limited to physical connection. In a case where both the operation terminal 400 and the teaching equipment 300 are connected in parallel or in series to the robot control equipment 200, the operation terminal 400 and the teaching equipment 300 may be configured such that they each can transmit a command or the like to the robot control equipment 200 at any timing without affecting each other, or may be configured such that they receive restrictions from, for example, the robot control equipment 200 so as to avoid overlapping of their transmission timings.

The operation terminal 400 is configured to perform part of operations that the teaching equipment 300 can perform on the robot 100. For example, the operation terminal 400 can receive a particular operation. The particular operation is part of operations to cause the robot 100 to perform actions, the operations being receivable by the teaching equipment 300. The operation terminal 400 outputs, to the robot control equipment 200, an operation command to cause the robot 100 to perform an action in accordance with the received particular operation.

As a non-limiting example, the particular operation may be different from an operation to perform teaching to the robot 100 by the teaching equipment 300. For example, the particular operation may be different from an operation to cause the robot 100 to perform an action, the operation being usable in teaching by the teaching equipment 300. The particular operation as the aforementioned operation may include a moving operation to cause the moving equipment 120 to perform an action. In the present embodiment, the particular operation includes a moving operation to perform teaching to the moving equipment 120. The moving operation may be a manual operation. The particular operation may include an operation for playback to cause the robot 100 to autonomously perform an action that has been taught. In the present embodiment, the particular operation includes an operation to cause the entire robot 100 to play back a predetermined action that has been taught. The particular operation may include an operation to command the robot 100 to autonomously return to the state of being in the position of origin. The particular operation may include an operation to command the robot 100 to come to an emergency stop. The emergency stop of the robot 100 may be an emergency stop of the robot body 110, an emergency stop of the moving equipment 120, or an emergency stop of both the robot body 110 and the moving equipment 120.

The position of origin may include various states and positions of the robot 100. For example, the position of origin may include: an initial position of the robot 100 for predetermined work that has been taught and the state of the robot 100 at the initial position; positions of the robot 100 set as a start point and a middle point in a process of the work and the state of the robot 100 at each position; positions of the robot 100 set as a start point and a middle point of a work section included in the process and the state of the robot 100 at each position; the position of the robot 100 at the end of the work and the state of the robot 100 at the position; the state of the robot 100 with the robotic arm 111 folded and accommodated within an area occupied by the moving equipment 120; the state of the robot 100 for preventing a person from getting caught by the robotic arm 111 when the person comes close to the robot 100; the position of the robot 100 when the robot 100 is charged with electric power and the state of the robot 100 at the position; the state of the robot 100 when the end effector 112 goes through replacement; the state of the robot 100 when the robot body 110, the moving equipment 120, or both the robot body 110 and the moving equipment 120 receive maintenance; and the state of the robot 100 when the robot 100 is transported.

The operation terminal 400 can receive robot information from the robot control equipment 200, the robot information being information indicating the state of the robot 100, and display the robot information on the touch panel of the presenter 420. For example, the robot information may include various information such as: an operation mode of the robot 100; the contents of work performed by the robot 100; progress on the work that is being performed; among processes included in the work, a process that is being performed by the robot 100; operating conditions of the robot 100, such as rotation amounts and electric current values of the servomotors 113 and 122; and a result of detection by the position detector 123.

The computer of the robot control equipment 200 and the computer of the operation terminal 400 each include circuitry or processing circuitry. The circuitry may include processing circuitry. The processing circuitry or circuitry includes processors, storage devices, and so forth. The processing circuitry or circuitry transmits and receives commands, information, data, etc. to and from other devices. The processing circuitry or circuitry receives signals inputted from various devices, and outputs control signals to control targets.

The storage devices may include memories, storages, or both memories and storages. Examples of the memories may include a RAM (Random Access Memory), which is a volatile semiconductor memory, and a ROM (Read-Only Memory), which is a nonvolatile semiconductor memory. Examples of the storages may include a semiconductor memory such as a flash memory, a hard disk, and a SSD (Solid State Drive). For example, the storage devices store a program executed by the processing circuitry or the circuitry, various data, etc.

At least part of the functions of the robot control equipment 200 and the operation terminal 400 may be realized by processors, memories, storages, etc. working in cooperation with one another. Processors and memories including a RAM and ROM form a computer system. For example, the computer system may realize the aforementioned functions by the processors executing a program stored in the ROM while using the RAM as a work area.

The functionality of the robot control equipment 200 and the operation terminal 400 may be partly or entirely realized by the above computer system, or may be partly or entirely realized by dedicated hardware circuitry such as electronic circuitry or integrated circuitry, or may be partly or entirely realized by a combination of the above computer system and hardware circuitry. Each of the robot control equipment 200 and the operation terminal 400 may execute processes by centralized control performed by a single computer, or may execute the processes by distributed control performed by multiple computers working in cooperation with each other.

As a non-limiting example, the processors may include a CPU (Central Processing Unit), MPU (Micro-Processing Unit), GPU (Graphics Processing Unit), microprocessor, processor core, multiprocessor, ASIC (Application-Specific Integrated Circuit), FPGA (Field Programmable Gate Array), reconfigurable processor, etc., and processing may be realized by logic circuitry or dedicated circuitry that is hardware circuitry included in, for example, integrated circuitry such as an IC (Integrated Circuit) chip or LSI (Large Scale Integration). Multiple functions of the robot control equipment 200 and the operation terminal 400 may be individually realized by integrated circuit chips, respectively, or may be partly or entirely realized by a single integrated circuit chip.

### [Hardware Configuration]

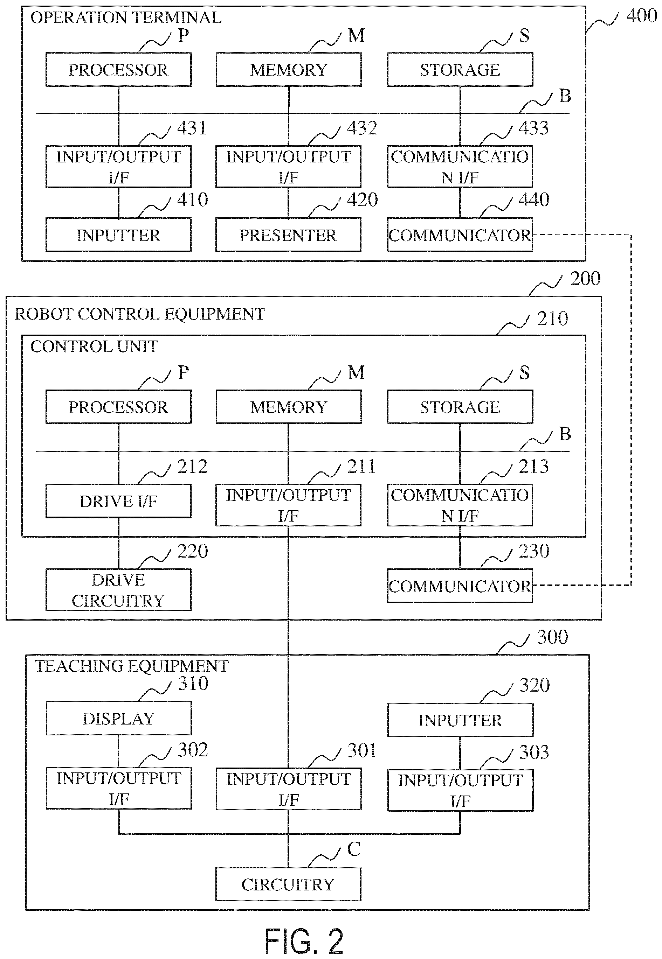

With reference to FIG. 2, one example of hardware configurations of the robot control equipment 200, the teaching equipment 300, and the operation terminal 400 according to the embodiment is described. FIG. 2 is a block diagram showing the one example of hardware configurations of the robot control equipment 200, the teaching equipment 300, and the operation terminal 400 according to the embodiment. The hardware configurations described below are merely one example. The hardware configurations of the robot control equipment 200, the teaching equipment 300, and the operation terminal 400 are not limited to those described below, but are modifiable as necessary.

The robot control equipment 200 includes a control unit 210, drive circuitry 220, and a communicator 230. The control unit 210 includes, as its components, a processor P, a memory M, a storage S, an input/output I/F (Interface) 211, a drive I/F 212, and a communication I/F 213. The components of the control unit 210 are connected to one another by a bus B. Alternatively, the components of the control unit 210 may be connected to one another by electrical wiring, cables, or the like. The control unit 210 may be an electronic circuit board, an electronic control unit, a microcomputer, or other electronic equipment.

The input/output I/F 211 is connected to the teaching equipment 300, and controls transmission and reception of signals between the control unit 210 and the teaching equipment 300. The drive I/F 212 is connected to the drive circuitry 220, and controls transmission and reception of signals and so forth between the control unit 210 and the drive circuitry 220. The drive circuitry 220 is circuitry that controls an electric current supplied to the robot 100. The communication I/F 213 is connected to the communicator 230, and controls transmission and reception of signals and so forth between the control unit 210 and the communicator 230. The communicator 230 is a device that mediates communication between the operation terminal 400 and the control unit 210, and may include communication circuitry and so forth. As a non-limiting example, in the present embodiment, the communicator 230 is a wireless communicator, and may include communication equipment, such as a modem, a router, and mobile data communication equipment.

The teaching equipment 300 includes circuitry C and input/output I/Fs 301 to 303. The circuitry C and the input/output I/Fs 301 to 303 are connected to one another by electrical wiring, cables, or the like. The input/output I/F 301 is connected to the input/output I/F 211 of the robot control equipment 200, and controls transmission and reception of signals between the teaching equipment 300 and the robot control equipment 200. The input/output I/F 302 is connected to the display 310, and controls transmission and reception of signals to and from the display 310. The input/output I/F 303 is connected to the inputter 320, and controls transmission and reception of signals to and from the inputter 320. The circuitry C processes signals transmitted and received between the input/output I/Fs 301 to 303. The circuitry C may be configured to control transmission, reception, conversion, etc. of signals.

The operation terminal 400 includes a processor P, a memory M, a storage S, input/output I/Fs 431 and 432, and a communication I/F 433. The processor P, the memory M, the storage S, the input/output I/Fs 431 and 432, and the communication I/F 433 are connected to one another by a bus B. Alternatively, these components may be connected to one another by electrical wiring, cables, or the like. The operation terminal 400 may further include a communicator 440.

The input/output I/F 431 is connected to the inputter 410, and controls transmission and reception of signals to and from the inputter 410. The input/output I/F 432 is connected to the presenter 420, and controls transmission and reception of signals to and from the presenter 420. The communication I/F 433 is connected to the communicator 440, and controls transmission and reception of signals to and from the communicator 440. The communicator 440 is a wireless communicator, and may include an antenna, communication circuitry, etc.

### [Functional Configuration]

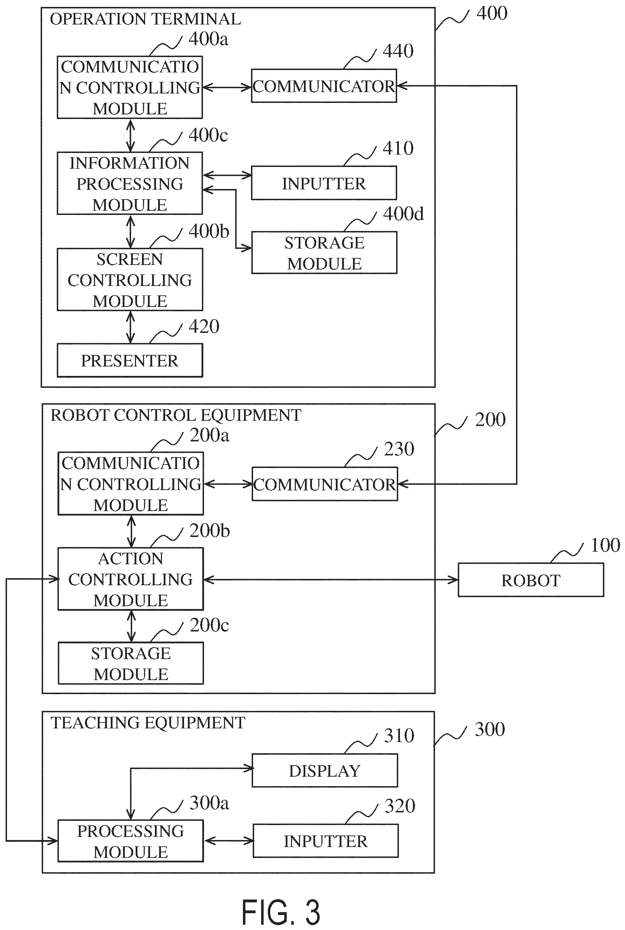

With reference to FIG. 3, one example of functional configurations of the robot control equipment 200, the teaching equipment 300, and the operation terminal 400 according to the embodiment is described. FIG. 3 is a block diagram showing the one example of functional configurations of the robot control equipment 200, the teaching equipment 300, and the operation terminal 400 according to the embodiment. The functional configurations described below are merely one example. The functional configurations of the robot control equipment 200, the teaching equipment 300, and the operation terminal 400 are not limited to those described below, but are modifiable as necessary.

The robot control equipment 200 includes, as its functional components, a communication controlling module 200a, an action controlling module 200b, and a storage module 200c. The teaching equipment 300 includes a processing module 300a as a functional component. The operation terminal 400 includes, as its functional components, a communication controlling module 400a, a screen controlling module 400b, an information processing module 400c, and a storage module 400d.

In the robot control equipment 200, the functionality of the communication controlling module 200a and the action controlling module 200b may be realized by the processor P, the memory M, and so forth, and the functionality of the storage module 200c may be realized by the memory M and the storage S.

The communication controlling module 200a controls wireless communication between the operation terminal 400 and the communicator 230. For example, the communication controlling module 200a processes commands, information, data, etc. received from the operation terminal 400, and converts them into a data type that is usable by the action controlling module 200b. The communication controlling module 200a processes commands, information, data, etc. to be transmitted to the operation terminal 400, and converts them into a transmissible data type.

The storage module 200c stores, for example, teaching data and information indicating the state of the robot 100.

The action controlling module 200b controls actions of the robot 100. The action controlling module 200b manages inputs and outputs of commands, information, data, etc. between the robot control equipment 200 and the teaching equipment 300 and between the robot control equipment 200 and the operation terminal 400. For example, the action controlling module 200b controls an action of the robot 100 in accordance with teaching data stored in the storage module 200c, an operation command received from the teaching equipment 300, an operation command received from the operation terminal 400 via the communication controlling module 200a, or a combination of two or more of these. The action controlling module 200b obtains information indicating operating conditions of the robot 100, such as rotation amounts and electric current values of the servomotors 113 and 122, and outputs the obtained information to the teaching equipment 300, the operation terminal 400, the storage module 200c, or two or more of these. In the teaching mode, the action controlling module 200b generates teaching data by using the information indicating the operating conditions of the robot 100, and stores the generated teaching data in the storage module 200c.

In the teaching equipment 300, the functionality of the processing module 300a may be realized by the circuitry C. The processing module 300a processes commands, information, etc. inputted via the inputter 320 as well as commands, information, data, etc. received from the robot control equipment 200. For example, the processing module 300a generates a signal indicating an operation command from, for example, a command and information inputted via the inputter 320, and transmits the generated signal to the robot control equipment 200. Upon receiving signals indicating robot information about the robot 100 from the robot control equipment 200, the processing module 300a converts the received signals into signals processable by the display 310, and outputs the converted signals to the display 310. As a result, the display 310 displays the robot information.

In the operation terminal 400, the functionality of the communication controlling module 400a, the screen controlling module 400b, and the information processing module 400c may be realized by the processor P, the memory M, and so forth, and the functionality of the storage module 400d may be realized by the memory M and the storage S.

The communication controlling module 400a controls communication between the robot control equipment 200 and the communicator 440. For example, the communication controlling module 400a processes commands, information, data, etc. received from the robot control equipment 200, and converts them into a data type that is usable by the information processing module 400c. The communication controlling module 400a processes commands, information, data, etc. to be transmitted to the robot control equipment 200, and converts them into a transmissible data type.

The screen controlling module 400b controls a screen displayed on the presenter 420 in accordance with, for example, a program as well as a command that is received from the information processing module 400c.

The information processing module 400c processes commands, information, etc. inputted via the inputter 410 as well as commands, information, data, etc. received from the robot control equipment 200. The information processing module 400c manages inputs and outputs of commands, information, data, etc. between the operation terminal 400 and the robot control equipment 200. For example, the information processing module 400c generates an operation command from, for example, a command and information inputted via the inputter 410, and transmits the generated command to the robot control equipment 200. The information processing module 400c obtains robot information about the robot 100 from the robot control equipment 200, and causes the screen controlling module 400b to display the robot information.

The storage module 400d stores various data, such as screen data and data received from the robot control equipment 200.

### [Operations of Operation Terminal]

Hereinafter, various operations of the operation terminal 400 according to the embodiment as well as examples of operations performed for the various operations are described.

### <Starting a robot operation application on the operation terminal>

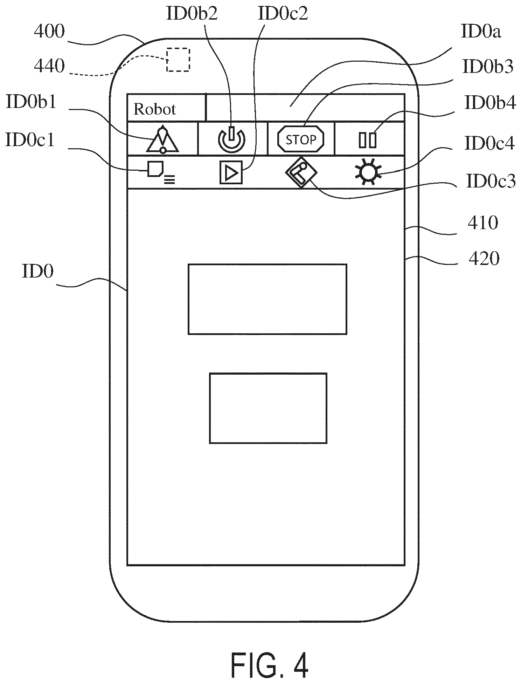

When the robot operation application is started on the operation terminal 400, the operation terminal 400, for example, displays a home screen ID0 on the presenter 420 as shown in FIG. 4. FIG. 4 shows one example of the home screen displayed on the operation terminal 400 after the robot operation application is started. As a non-limiting example, in the present embodiment, the operation terminal 400 displays a connected robot field ID0a, an error reset button ID0b1, a motor power indicator lamp ID0b2, an emergency stop lamp ID0b3, a temporary stop button ID0b4, a connection setting tab ID0c1, a monitor screen tab ID0c2, a teaching screen tab ID0c3, and a setting tab ID0c4 on the upper part of the home screen ID0.

The middle and lower parts of the home screen ID0 may include any display. The operation terminal 400 always displays the connected robot field ID0a, the buttons ID0b1 and ID0b4, the lamps ID0b2 and ID0b3, and the tabs ID0c1 to ID0c4, regardless of the type of the displayed screen. These buttons and tabs are input elements to receive inputs made by the operator.

The connected robot field ID0a indicates a robot that is currently connected to the operation terminal 400. As will be described below, connection targets for the operation terminal 400 include the robot 100, which is an actual robot, and a virtual robot. In the description below, in the case of referring to a "robot", the "robot" may mean the actual robot 100, the virtual robot, or both the actual robot 100 and the virtual robot.

The error reset button ID0b1 indicates presence or absence of a detection of an error such as an abnormality in, for example, the robot 100, the virtual robot, the robot control equipment 200, the operation terminal 400, and the communication between the robot control equipment 200 and the operation terminal 400. In a case where no error is detected, the operation terminal 400 does not allow receiving an input to the error reset button ID0b1, whereas in a case where an error is detected, the operation terminal 400 allows receiving an input to the error reset button ID0b1. Upon receiving a predetermined input on the error reset button ID0b1, the operation terminal 400 transmits a command to cancel the error to the robot control equipment 200. The operation terminal 400 may transition the screen on the presenter 420 to a screen relating to the error. For example, the above predetermined input may be, but not limited to, an input made by pressing the error reset button ID0b1 with the operator's finger, a stylus pen, or the like. That is, the predetermined input may be a tap input or the like.

For example, the operation terminal 400 may have a function of detecting the presence or absence of an abnormality in the communication state between the robot control equipment 200 and the operation terminal 400. In a case where an abnormality is detected, the operation terminal 400 may disconnect the communication between the robot control equipment 200 and the operation terminal 400, and indicate an error detection on the error reset button ID0b1. In this manner, an erroneous action of the robot 100 due to the abnormality in the communication state is suppressed from occurring.

The motor power indicator lamp ID0b2 indicates whether the power to the servomotors 113 and 122 of the robot 100 is in the ON state or the OFF state. The operation terminal 400 does not allow receiving an input to the motor power indicator lamp ID0b2.

The emergency stop lamp ID0b3 indicates whether an emergency power supply for the robot 100 is in the ON state or the OFF state. The operation terminal 400 does not allow receiving an input to the emergency stop lamp ID0b3. For example, upon receiving a command to bring the robot 100 to an emergency stop, the robot control equipment 200 shifts the state of the emergency power supply from the OFF state to the ON state, thereby shifting from power control based on a normal power supply to power control based on the emergency power supply. When the power control is based on the normal power supply, all the functions of the robot 100 are executable. On the other hand, when the power control is based on the emergency power supply, part of the functions of the robot 100 are executable. For example, functions of the robot 100 for performing work are not executable, but, for example, functions for the communication of the operation terminal 400 and the teaching equipment 300 as well as functions of the robot 100 for performing minor actions, such as for returning to the position of origin, may be executable. Accordingly, the emergency stop lamp ID0b3 can also indicate whether or not the robot 100 is in an emergency stop state.

The operation terminal 400 may have a function of receiving an input to the emergency stop lamp ID0b3. Upon receiving a predetermined input, such as a long press input, on the emergency stop lamp ID0b3, the operation terminal 400 may transmit, to the robot control equipment 200, a command to bring the robot 100 to an emergency stop.

The temporary stop button ID0b4 is a button to temporarily stop an action of the robot. The operation terminal 400 receives an input to the temporary stop button ID0b4 at any timing. The operation terminal 400 shows the temporary stop button ID0b4 selectively as a temporary stop display or as a playback display. For example, upon receiving a predetermined input, such as a tap input, on the temporary stop button ID0b4 of the temporary stop display, the operation terminal 400 transmits, to the robot control equipment 200, a command to temporarily stop an action of the robot 100, and changes the display of the temporary stop button ID0b4 to the playback display. Upon receiving a predetermined input, such as a tap input, on the temporary stop button ID0b4 of the playback display, the operation terminal 400 transmits, to the robot control equipment 200, a command to resume the action of the robot, and changes the display of the temporary stop button ID0b4 to the temporary stop display.

The connection setting tab IDc1 is a tab to open a screen to set a connection between the operation terminal 400 and the robot. The operation terminal 400 receives an input to the connection setting tab IDc1 at any timing. Upon receiving a predetermined input, such as a tap input, on the connection setting tab IDc1, the operation terminal 400 transitions the screen on the presenter 420 to a connection setting screen ID1.

The monitor screen tab ID0c2 is a tab to open a screen to cause the robot to perform a predetermined action that has been taught, i.e., to play back the predetermined action. The operation terminal 400 receives an input to the monitor screen tab ID0c2 at any timing. Upon receiving a predetermined input, such as a tap input, on the monitor screen tab ID0c2, the operation terminal 400 transitions the screen on the presenter 420 to a playback operation screen ID2.

The teaching screen tab ID0c3 is a tab to open a screen to perform robot teaching. The operation terminal 400 receives an input to the teaching screen tab ID0c3 at any timing. Upon receiving a predetermined input, such as a tap input, on the teaching screen tab ID0c3, the operation terminal 400 transitions the screen on the presenter 420 to a teaching operation screen ID3.

The setting tab ID0c4 is a tab to open a screen to make various settings of the robot. The operation terminal 400 receives an input to the setting tab ID0c4 at any timing. Upon receiving a predetermined input, such as a tap input, on the setting tab ID0c4, the operation terminal 400 transitions the screen on the presenter 420 to a setting screen ID4.

### <Connection between the operation terminal and a robot>

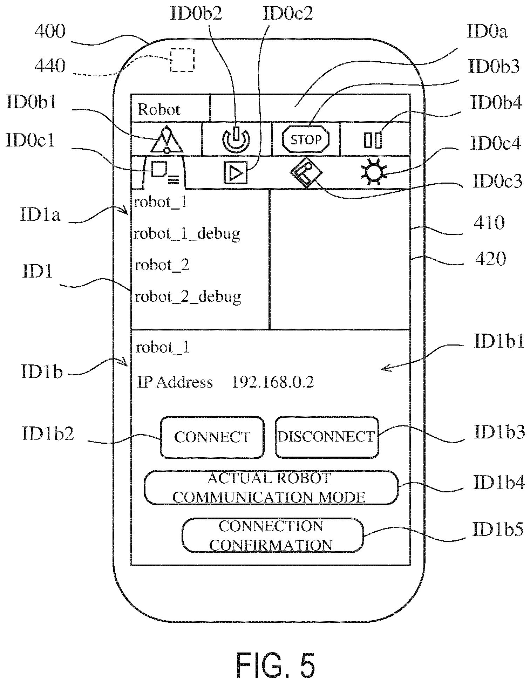

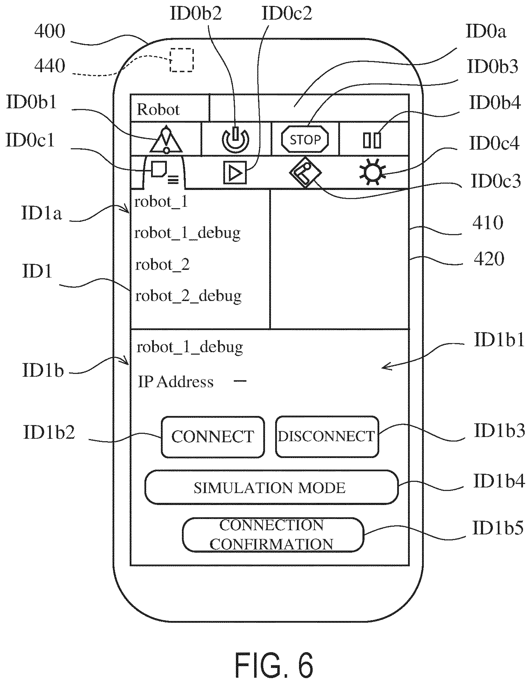

Upon receiving a predetermined input on the connection setting tab IDc1, the operation terminal 400 transitions the screen on the presenter 420 to, for example, the connection setting screen ID1 as shown in FIG. 5 and FIG. 6. FIG. 5 and FIG. 6 each show one example of the connection setting screen displayed on the operation terminal 400. As a non-limiting example, in the present embodiment, the operation terminal 400 displays a target robot field ID1a and a connection target field ID1b on the connection setting screen ID1. Upon receiving a predetermined input, such as a tap input, on the connection setting tab IDc1 while the connection setting screen ID1 is being displayed, the operation terminal 400 may transition the screen on the presenter 420 to the home screen ID0.

As shown in FIG. 5, the target robot field ID1a includes a list of connectable robots registered in the operation terminal 400. The connectable robots may include the actual robot 100 and the virtual robot. The virtual robot is a simulation model of the actual robot 100. In the target robot field ID1a, the actual robot 100 may be, for example, indicated by the name of the robot, such as "robot_1". The virtual robot may be indicated by a name that includes, as a part thereof, the name of the actual robot 100 corresponding to the virtual robot, for example, by a name "robot_1_debug". For example, robot model information indicating the virtual robot may be stored in the operation terminal 400, or stored in the robot control equipment 200, or stored in an external device such as a cloud server. The operation terminal 400 may obtain the robot model information from the robot control equipment 200 or the external device.

The operation terminal 400 receives a predetermined input, such as a tap input, on the name of a robot in the target robot field ID1a to select the robot. The operation terminal 400 indicates, in the connection target field ID1b, information about the robot whose name has been selected. The connection target field ID1b includes a name field ID1b1, a connection button ID1b2 and a disconnection button ID1b3, which indicate a state of connection, a communication mode field ID1b4, and a connection confirmation button ID1b5.

The name field ID1b1 includes the name and address of the selected robot. Upon receiving a predetermined input, such as a tap input, on the connection button ID 1 b2, the operation terminal 400 connects to the robot indicated in the name field ID1b1, and displays the connection button ID 1 b2 in a highlighted manner. Upon receiving a predetermined input, such as a tap input, on the disconnection button ID1b3, the operation terminal 400 disconnects from the robot indicated in the name field ID1b1, and displays the disconnection button ID1b3 in a highlighted manner.

For example, in a case where the name of the actual robot 100 is indicated in the name field ID1b1, upon receiving a predetermined input on the connection button ID1b2, the operation terminal 400 transmits, to the robot control equipment 200 of the robot 100, a command requesting permission for an operation-enabled connection with the robot control equipment 200. Upon receiving from the robot control equipment 200 a response indicating permission for the request, the operation terminal 400 turns into a state of the operation-enabled connection with the robot control equipment 200, and displays the connection button ID1a in a highlighted manner. When the operation terminal 400 is in the state of the operation-enabled connection, the operation terminal 400 may transmit a command requesting turning on the light sources 124 of the robot 100 to the robot control equipment 200. Upon receiving the command, the robot control equipment 200 may turn on the light sources 124 of the moving equipment 120. The robot control equipment 200 may temporarily turn on the light sources 124, or may keep turning on the light sources 124 while the state of the operation-enabled connection continues. For example, in the state of the operation-enabled connection, the operation terminal 400 may request, at predetermined times, for example, at predetermined time intervals, the robot control equipment 200 for robot information about the robot 100, thereby obtaining the robot information.

The communication mode field ID1b4 indicates a mode of communication with the robot. In a case where the robot indicated in the name field ID1b1 is the actual robot 100, the operation terminal 400 displays "ACTUAL ROBOT COMMUNICATION MODE" in the communication mode field ID1b4 as shown in FIG. 5. In a case where the robot indicated in the name field ID1b1 is the virtual robot, the operation terminal 400 displays "SIMULATION MODE" in the communication mode field ID1b4 as shown in FIG. 6.

In a case where the operation terminal 400 is connected to the robot 100 in the actual robot communication mode, the robot 100 can be operated by using the operation terminal 400. In a case where the operation terminal 400 is connected to the virtual robot in the simulation mode, at least part of the functions of the operation terminal 400 can be simulated and various screen contents of the operation terminal 400 can be checked, by using the virtual robot.

Upon receiving a predetermined input, such as a tap input, on the connection confirmation button ID1b5, the operation terminal 400 transmits a command requesting the connected actual robot 100 for connection confirmation. Upon receiving the command, the robot control equipment 200 of the robot 100 causes the robot 100 to perform a predetermined action. As a non-limiting example, the predetermined action may be an action of the robotic arm 111, an action of the moving equipment 120, turning on of the light sources 124 of the robot 100, or a combination of two or more of these. In the present embodiment, the robot control equipment 200 temporarily turns on the light sources 124.

The actual robot 100 and the operation terminal 400 being connected to each other means the robot control equipment 200 controlling the robot 100 and the operation terminal 400 being connected to each other. Hereinafter, "the robot control equipment 200 and the operation terminal 400 being connected to each other" may be expressed as "the robot 100 and the operation terminal 400 being connected to each other", in which the robot 100 is a control target for the robot control equipment 200. The connection in which the robot 100 or the robot control equipment 200 and the operation terminal 400 are connected to each other means the connection in which an operation by the operation terminal 400 is receivable by the robot control equipment 200, i.e., the operation terminal 400 being in the state of the operation-enabled connection.

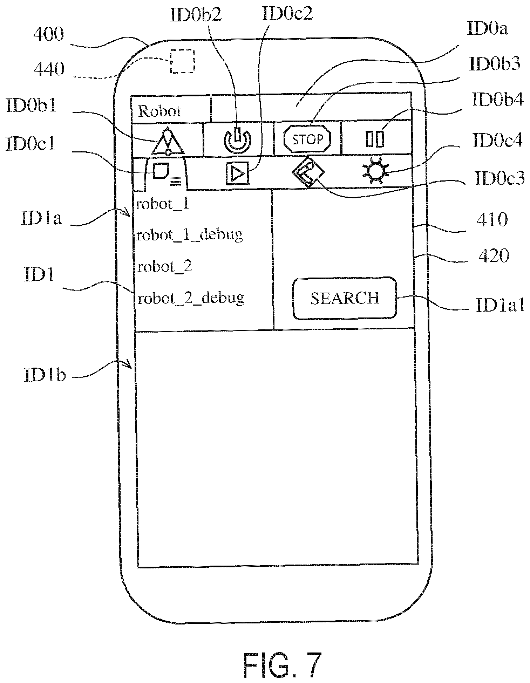

In the above-described example, the operation terminal 400 displays, in the target robot field ID1a, connectable robots that are registered in the operation terminal 400. However, this is merely a non-limiting example. Alternatively, for example, the operation terminal 400 may be configured to search for a connectable actual robot 100. For example, as shown in FIG. 7, the target robot field ID1a may include a search button ID1a1. FIG. 7 shows a variation of the connection setting screen displayed on the operation terminal 400.

The operation terminal 400 may be configured to, upon receiving a predetermined input such as a tap input on the search button ID1a1, simultaneously transmit, to the robot control equipment 200 of each of all the robots 100 that are located within a transmission-enabled area of the operation terminal 400, a request for connectivity for the operation-enabled connection as to whether or not the operation-enabled connection with the operation terminal 400 is possible. All the robot control equipment 200 is always in a request-waiting state, i.e., the state of being able to receive a request from the operation terminal 400. The operation terminal 400 may indicate, in the target robot field ID1a, the name of the robot 100 of each robot control equipment 200 from which the operation terminal 400 has received a response indicating being connectable for the operation-enabled connection, as a connectable actual robot. Targets to which the aforementioned request is simultaneously transmitted may be actual robots registered in the operation terminal 400 among all the robots 100 located within the transmission-enabled area. In this case, among the registered actual robots, the operation terminal 400 may display only the names of the robots 100 from which the operation terminal 400 has received a response indicating being connectable for the operation-enabled connection.

### <Operations by the operation terminal for a playback action of a robot or the like>

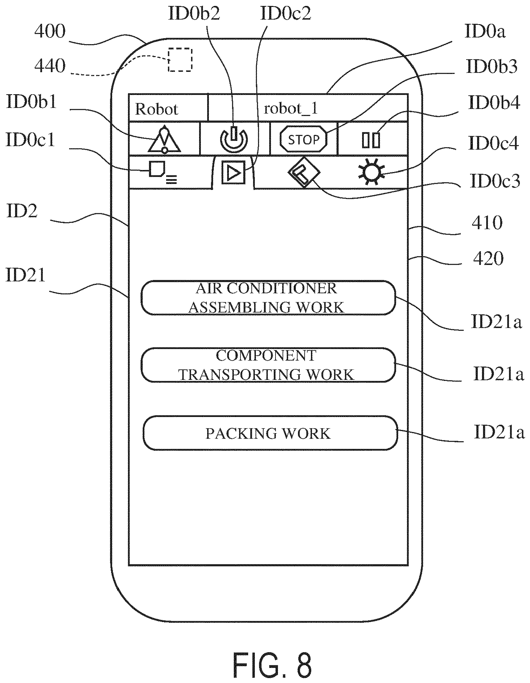

Upon receiving a predetermined input on the monitor screen tab ID0c2, the operation terminal 400 transitions the screen on the presenter 420 to, for example, one of the playback operation screens ID2 as shown in FIG. 8. FIG. 8 shows one example of an action selection screen that is one of the playback operation screens ID2 to be displayed on the operation terminal 400. For example, in a case where the operation terminal 400 is unconnected to any robot, the operation terminal 400 may be configured not to allow receiving an input to the monitor screen tab ID0c2, and may be configured to display a message or the like indicating that the operation terminal 400 is unconnected to any robot. In this example, as indicated in the connected robot field ID0a, the operation terminal 400 is connected to the actual robot 100 whose name is "robot_1". Upon receiving a predetermined input, such as a tap input, on the monitor screen tab ID0c2 while the playback operation screen ID2 is being displayed, the operation terminal 400 may transition the screen on the presenter 420 to the home screen ID0.

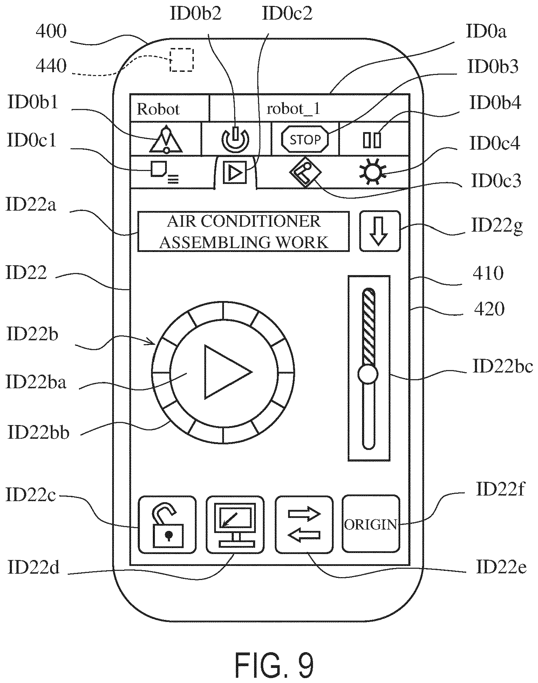

The operation terminal 400 displays, on an action selection screen ID21, an action selection button ID21a indicating a predetermined action that has been taught, such as work that has been taught. In this example, as a non-limiting example, the action selection screen ID21 includes at least one action selection button ID21a corresponding to at least one predetermined action. Upon receiving a predetermined input, such as a tap input, on one of the action selection buttons ID21a, the operation terminal 400 transitions the screen on the presenter 420 to, for example, a robot operation screen ID22 as shown in FIG. 9. FIG. 9 shows one example of the robot operation screen, which is one of the playback operation screens to be displayed on the operation terminal 400. Specifically, FIG. 9 shows one example of the robot operation screen for air conditioner assembling work.

In accordance with the transition to the robot operation screen ID22, the operation terminal 400 shifts to the playback mode. Alternatively, the timing of shifting to the playback mode may be any timing after the transition to the playback operation screen ID2. At the shift to the playback mode, or after the shift to the playback mode, the operation terminal 400 may transmit, to the robot control equipment 200, a command to perform control of the air conditioner assembling work in the playback mode. As a non-limiting example, in the present embodiment, the operation terminal 400 displays an ongoing work field ID22a, an operation key ID22b, a lock button ID22c, a monitor button ID22d, a switch button ID22e, a position of origin button ID22f, and a caller button ID22g on the robot operation screen ID22. These elements, except the ongoing work field ID22a, are input elements.

The ongoing work field ID22a indicates ongoing work, i.e., a predetermined action that is being performed.

The operation key ID22b is a key to receive an input of, for example, a command to cause the robot 100 to perform work that has been taught. Upon receiving an input on the operation key ID22b, the operation terminal 400 transmits an operation command to the robot control equipment 200 in accordance with the received input content. Examples of the input may include a long press input, a tap input, and other types of inputs.

In the case of performing air conditioner assembling work as in this example, the operation key ID22b may include: a playback stop button ID22ba to give a command to perform the work and to give a command to stop performing the work; an annular bar ID22bb to indicate a load on the robot 100, the annular bar ID22bb surrounding the playback stop button ID22ba; and a scroll bar ID22bc to give a command setting the speed of the work, or the speed of the action, performed by the robot 100. The playback stop button ID22ba is a button to give a command to autonomously perform the work that has been taught and to give a command to stop performing the work. The operation terminal 400 may use one playback stop button ID22ba to receive an input to perform the work and to receive an input to stop performing the work. For example, while the work is being performed, the operation terminal 400 may display and cause the playback stop button ID22ba to function as a stop button, and process an input received via the playback stop button ID22ba as a command to stop performing the work. Also, while the work is being stopped, the operation terminal 400 may display and cause the playback stop button ID22ba to function as a playback button, and process an input received via the playback stop button ID22ba as a command to perform the work. The operation key ID22b is not limited to the above example. Alternatively, for example, the operation key ID22b may include various keys such as: a key to give a command to perform, and to give a command to stop performing, at least one process included in the work; and a key to give a command to perform, and to give a command to stop performing, a single piece of work.

The lock button ID22c is a button to switch between a locked state, which is a state of not allowing receiving an input to the robot operation screen ID22, and an unlocked state, which is a state of allowing receiving an input to the robot operation screen ID22. When the operation terminal 400 is in the locked state, the operation terminal 400 may not allow receiving inputs to any of the input elements on the robot operation screen ID22 except the lock button ID22c, or may not allow receiving inputs to some of the input elements. For example, the some of the input elements may be those relating to performing an action of the robot 100, such as the operation key ID22b.

When the operation terminal 400 is in the unlocked state, the operation terminal 400 displays the lock button ID22c in a mode indicating the unlocked state, whereas when the operation terminal 400 is in the locked state, the operation terminal 400 displays the lock button ID22c in a mode indicating the locked state.

When the operation terminal 400 is in the locked state, upon receiving a predetermined input, such as a long press input, on the lock button ID22c, the operation terminal 400 shifts to the unlocked state, and switches the mode of the lock button ID22c from the one indicating the locked state to the one indicating the unlocked state. When the operation terminal 400 is in the unlocked state, if a state of receiving no input to the input elements has continued for a predetermined time, the operation terminal 400 may shift to the locked state, and switch the mode of the lock button ID22c from the one indicating the unlocked state to the one indicating the locked state. The above input elements may be unlocked input elements. When the operation terminal 400 is in the unlocked state, in addition to the above, or instead of the above, the operation terminal 400 may shift to the locked state upon receiving a predetermined input, such as a long press input, on the lock button ID22c.

Inputs for shifting to the unlocked state and for shifting to the locked state are not limited to the above, but may be, for example, other inputs to the robot operation screen ID22. Examples of the other inputs may include: an input of a trajectory of a motion such as a swiping motion, characters, numbers, or a password, the input being made on the robot operation screen ID22 with the operator's finger, a stylus pen, or the like; an input of biometric information, such as a fingerprint or voice of the operator, to a sensor included in the operation terminal 400; an input of an image of, for example, the operator's face to a camera included in the operation terminal 400; and a combination of two or more of these.

The position of origin button ID22f is a button to command the robot 100 to return to the position of origin. Upon receiving a predetermined input on the position of origin button ID22f, the operation terminal 400 transmits, to the robot control equipment 200, a command to return the robot 100 to the position of origin. For example, the above predetermined input may be a tap input or a long press input. Examples of the position of origin are as described above.

The caller button ID22g is a button to bring the screen on the presenter 420 back to the action selection screen ID21. Upon receiving a predetermined input, such as a tap input, on the caller button ID22g, the operation terminal 400 transitions the screen on the presenter 420 to the action selection screen ID21.

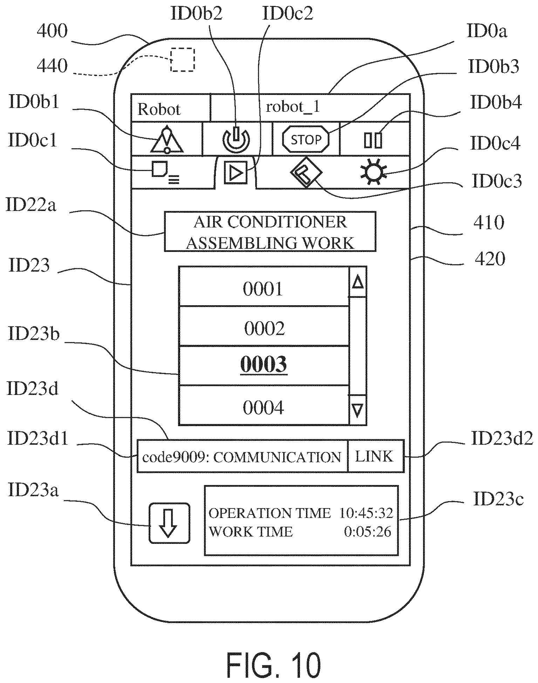

The monitor button ID22d is a button to call the state of the robot 100. Upon receiving a predetermined input, such as a tap input, on the monitor button ID22d, the operation terminal 400 transitions the screen on the presenter 420 to, for example, a monitor function screen ID23 as shown in FIG. 10. FIG. 10 shows one example of the monitor function screen displayed on the operation terminal 400. The monitor function screen ID23 shows, for example, the operation status of the robot 100 and the progress in the work performed by the robot 100. As a non-limiting example, in the present embodiment, the operation terminal 400 displays the ongoing work field ID22a, a caller button ID23a, a work progress field ID23b, a time field ID23c, and an error code field ID23d on the monitor function screen ID23. The caller button ID23a and the error code field ID23d are input elements.

Upon receiving the aforementioned predetermined input on the monitor button ID22d, the operation terminal 400 may request the robot control equipment 200 for robot information indicating the state of the robot 100. In addition thereto, or instead thereof, at predetermined times, for example, at predetermined time intervals, the operation terminal 400 may request the robot control equipment 200 for robot information. The operation terminal 400 may store and accumulate the robot information received from the robot control equipment 200. The operation terminal 400 may generate and display the monitor function screen ID23 by using the robot information received from the robot control equipment 200, or the robot information stored in the operation terminal 400, or both of these information.

The caller button ID23a is a button to bring the screen on the presenter 420 back to the robot operation screen ID22, and has the same functionality as that of the previously described caller button.

The work progress field ID23b indicates a progress on ongoing work. As a non-limiting example, in the present embodiment, the operation terminal 400 indicates all the processes included in the ongoing work and an ongoing process in the work progress field ID23b. In FIG. 10, the ongoing process is displayed in a highlighted manner.

The time field ID23c indicates elapsed times. As a non-limiting example, in the present embodiment, the operation terminal 400 indicates an operation time and a work time in the time field ID23c. The operation time is an elapsed time since the start of the ongoing work, and the work time is an elapsed time since the start of the ongoing process.

The error code field ID23d includes a display field ID23d1 and a link button ID23d2. The display field ID23d1 indicates details of an error that has occurred. The link button ID23d2 is a button to transition to a screen that relates to the error indicated in the display field ID23d1.

Upon obtaining information about an error that has occurred in, for example, the robot 100, the virtual robot, the robot control equipment 200, the operation terminal 400, or the communication between the robot control equipment 200 and the operation terminal 400, the operation terminal 400 indicates the details of the error in the display field ID23d1. For example, the display field ID23d1 may indicate an identification number, such as an error code, and the name of the error. The display field ID23d1 may indicate the details of the most recent error, or may indicate a history of errors. The errors include an error in a simulation using the virtual robot.

Upon receiving a predetermined input, such as a tap input, on the link button ID23d2, the operation terminal 400 transitions the screen on the presenter 420 to a screen relating to the error indicated in the display field ID23d1. For example, the screen may be a screen for error management, a screen showing trouble shooting, or a screen showing a history of errors.

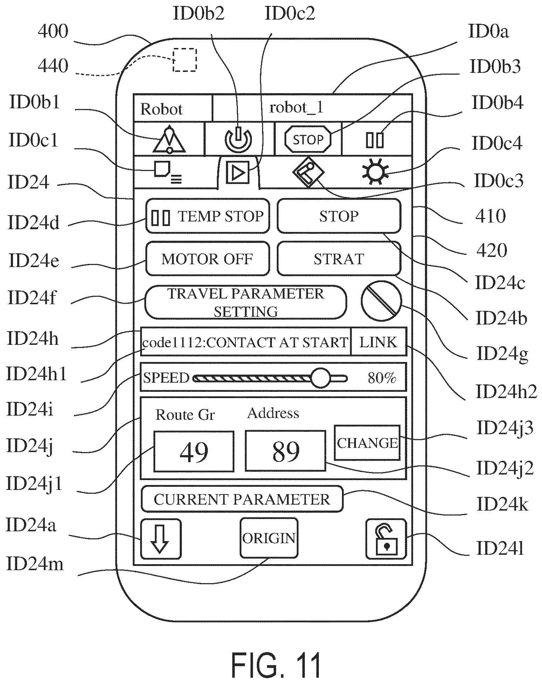

With reference to FIG. 9, the switch button ID22e is a button to call the state of the moving equipment 120. Upon receiving a predetermined input, such as a tap input, on the switch button ID22e, the operation terminal 400 transitions the screen on the presenter 420 to, for example, a moving equipment operation screen ID24 as shown in FIG. 11. FIG. 11 shows one example of the moving equipment operation screen displayed on the operation terminal 400. The moving equipment operation screen ID24 shows, for example, the operation status and various settings of the moving equipment 120.

As a non-limiting example, in the present embodiment, the operation terminal 400 displays a caller button ID24a, a start button ID24b, a stop button ID24c, a temporary stop button ID24d, a motor power button ID24e, a travel parameter setting button ID24f, a start condition switch ID24g, an error code field ID24h, a monitor speed change bar ID24i, a route field ID24j, a current parameter field ID24k, a lock button ID24l, and a position of origin button ID24m on the moving equipment operation screen ID24. All of these elements are input elements.

Upon receiving a predetermined input on the switch button ID22e, the operation terminal 400 may request the robot control equipment 200 for information about the moving equipment 120. In addition thereto, or instead thereof, at predetermined times, for example, at predetermined time intervals, the operation terminal 400 may request the robot control equipment 200 for the information about the moving equipment 120. The operation terminal 400 may store and accumulate the information about the moving equipment 120 received from the robot control equipment 200. The operation terminal 400 may generate and display the moving equipment operation screen ID24 by using the information about the moving equipment 120 received from the robot control equipment 200, or the information about the moving equipment 120 stored in the operation terminal 400, or both of these information.

The caller button ID24a is a button to bring the screen on the presenter 420 back to the robot operation screen ID22, and has the same functionality as that of the previously described caller buttons.

The start button ID24b is a button to start the moving equipment 120.

Alternatively, the start button ID24b may be configured as a button to start the entire robot 100. Upon receiving a predetermined input, such as a tap input, on the start button ID24b, the operation terminal 400 transmits a command to start the moving equipment 120 to the robot control equipment 200, and displays the start button ID24b in a highlighted manner.

The stop button ID24c is a button to stop the moving equipment 120.

Alternatively, the stop button ID24c may be configured as a button to stop the entire robot 100. Upon receiving a predetermined input, such as a tap input, on the stop button ID24c, the operation terminal 400 transmits a command to stop the moving equipment 120 to the robot control equipment 200, and displays the stop button ID24c in a highlighted manner. Examples of the stopping may include: turning OFF the power to the robot 100; turning OFF the power to the moving equipment 120, cutting the power supply to components relating to the moving equipment 120; and blocking the robot control equipment 200 from controlling the moving equipment 120.

The temporary stop button ID24d is a button to temporarily stop the action of the moving equipment 120. Alternatively, the temporary stop button ID24d may be configured as a button to temporarily stop the action of the entire robot 100. During the temporary stop, electric power may be supplied to the moving equipment 120. The temporary stop button ID24d has the same functionality as the previously exemplified functionality of the temporary stop button ID0b4. Upon receiving a predetermined input, such as a tap input, on the temporary stop button ID24d of the temporary stop display, the operation terminal 400 transmits a command to temporarily stop the action of the moving equipment 120 to the robot control equipment 200, and changes the display of the temporary stop button ID24d to the playback display. Upon receiving a predetermined input, such as a tap input, on the temporary stop button ID24d of the playback display, the operation terminal 400 transmits a command to resume the action of the moving equipment 120 to the robot control equipment 200, and changes the display of the temporary stop button ID24d to the temporary stop display.

The motor power button ID24e indicates whether the power to the servomotor 122 of the moving equipment 120 is in the ON state or the OFF state. The operation terminal 400 may receive an input to the motor power button ID24e. For example, upon receiving a predetermined input, such as a tap input, on the motor power button ID24e while it is indicating that the power to the servomotor 122 is in the ON state, the operation terminal 400 may transmit a command to turn OFF the power to the servomotor 122 to the robot control equipment 200, and may turn the display of the motor power button ID24e to the display indicating the OFF state. Upon receiving a predetermined input, such as a tap input, on the motor power button ID24e while it is indicating that the power to the servomotor 122 is in the OFF state, the operation terminal 400 may transmit a command to turn ON the power to the servomotor 122 to the robot control equipment 200, and may turn the display of the motor power button ID24e to the display indicating the ON state.

The travel parameter setting button ID24f is a button to set parameters relating to the traveling of the moving equipment 120. Examples of the parameters may include those indicating information such as a speed, a type of action, an action program, a curvature radius of a travel route, a next target point, and a magnetic material line to follow. Upon receiving a predetermined input, such as a tap input, on the travel parameter setting button ID24f, the operation terminal 400 may open a screen to set travel parameters, and may receive changes to the travel parameters.

The start condition switch ID24g is a switch to change conditions at the time of starting. For example, the conditions at the time of starting, i.e., start conditions, may include an initial state or the like of the moving equipment 120 at the time of starting, and may further include an initial state or the like of the robot body 110 at the time of starting. Upon receiving an input of rotating the start condition switch ID24g, the operation terminal 400 changes the start conditions to adopt.

Similar to the error code field ID23d of the monitor function screen ID23, the error code field ID24h includes a display field ID24h1 and a link button ID24h2. The error code field ID24h on the operation terminal 400 has the same functionality as the previously exemplified functionality of the error code field ID23d. The operation terminal 400 indicates the details of an error relating to the moving equipment 120 in the display field ID24h1, and links them to a screen relating to the error via the link button ID24h2.

The monitor speed change bar ID24i is a bar to set and display the action speed of the moving equipment 120. The monitor speed change bar ID24i includes a linear bar and a point that is slidable along the linear bar. The operation terminal 400 receives an input on the point of the monitor speed change bar ID24i. In response to the point being slid along the bar, the operation terminal 400 changes the action speed. For example, the input and slide may be a slide performed in a tapped state. Based on the position of the point on the bar, the operation terminal 400 determines the action speed, and displays the determined action speed as a numerical value.

The route field ID24j indicates information about a route for the moving equipment 120. The route field ID24j includes a route group field ID24j 1, an address field ID24j2, and a change button ID24j3. The operation terminal 400 indicates, in the route group field ID24j 1, a sign such as a number or symbol indicating a route group set for the moving equipment 120. The operation terminal 400 also indicates, in the address field ID24j2, a sign such as a number or symbol indicating a target point set for the moving equipment 120. The target point may include a departure point, at least one via point, a destination point, or a combination of two or more of these. The route group may include a combination of more than one route. For example, the route group may include a combination of more than one route that sequentially connects a departure point, at least one via point, and a destination point to one another. For example, the route group may be a program that defines routes and an order in which to travel the routes.

The change button ID24j3 is a button to change the route group and the target point, which are indicated in the route group field ID24j 1 and the address field ID24j2, respectively. Upon receiving a predetermined input, such as a tap input, on the change button ID24j3, the operation terminal 400 may open a screen to set the route group and the target point, and may receive changes to the route group and the target point.

The current parameter field ID24k indicates the current state of parameters set for the moving equipment 120 and the current state of parameters relating to the moving equipment 120. These parameters may include travel parameters set for the moving equipment 120. These parameters may be ongoing parameters. Upon receiving a predetermined input, such as a tap input, on the current parameter field ID24k, the operation terminal 400 opens a field for display, the field indicating the details of these parameters.

The lock button ID24l is a button that indicates a locked state and an unlocked state. The locked state is a state of not allowing receiving inputs to the input elements on the moving equipment operation screen ID24, whereas the unlocked state is a state of allowing receiving inputs to the input elements. The lock button ID24l on the operation terminal 400 has the same functionality as the previously exemplified functionality of the lock button ID22c on the robot operation screen ID22.

The position of origin button ID24m is a button to command the robot 100 to return to the position of origin. The position of origin button ID24m on the operation terminal 400 has the same functionality as the previously exemplified functionality of the position of origin button ID22f on the robot operation screen ID22.

### <Operations by the operation terminal to cause the robot or the like to an action to be taught>

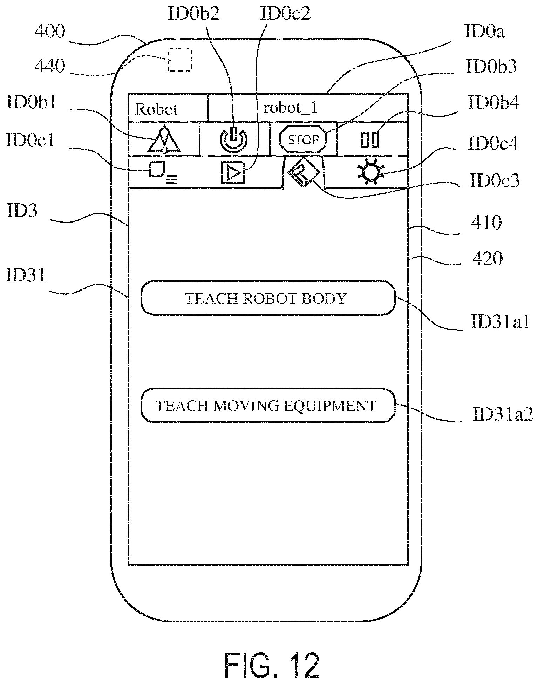

Upon receiving a predetermined input on the teaching screen tab ID0c3, the operation terminal 400 transitions the screen on the presenter 420 to, for example, one of the teaching operation screens ID3 as shown in FIG. 12. FIG. 12 shows one example of a teaching target selection screen that is one of the teaching operation screens ID3 to be displayed on the operation terminal 400. For example, in a case where the operation terminal 400 is unconnected to any robot, the operation terminal 400 may be configured not to allow receiving an input to the teaching screen tab ID0c3, and may be configured to display a message or the like indicating that the operation terminal 400 is unconnected to any robot. In this example, as indicated in the connected robot field ID0a, the operation terminal 400 is connected to the actual robot 100 whose name is "robot_1". Upon receiving a predetermined input, such as a tap input, on the teaching screen tab ID0c3 while the teaching operation screen ID3 is being displayed, the operation terminal 400 may transition the screen on the presenter 420 to the home screen ID0.

The operation terminal 400 displays, on a teaching target selection screen ID31, selection buttons ID31a1 and ID31a2 indicating teaching targets. In this example, as a non-limiting example, the selection button ID31a1 is a button to select teaching to the robot body 110, and the selection button ID31a2 is a button to select teaching to the moving equipment 120. The teaching targets may be the robot body 110 and the moving equipment 120 of the actual robot 100, or may be the robot body and the moving equipment of the virtual robot.

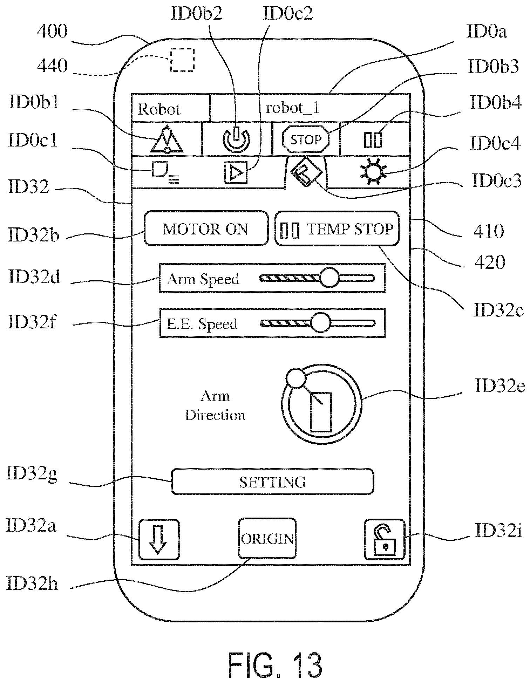

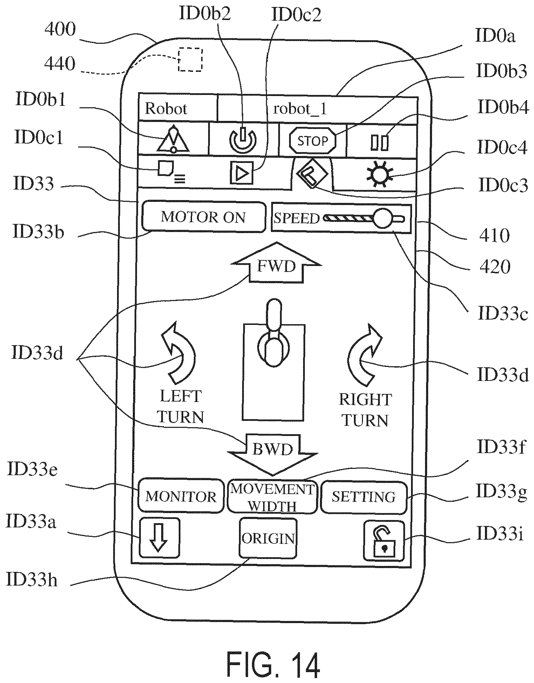

Upon receiving a predetermined input, such as a tap input, on the selection button ID31a1 or ID31a2, the operation terminal 400 transmits, to the robot control equipment 200, a command requesting performing teaching to the robot body 110 or the moving equipment 120. Upon receiving a response indicating approval for teaching to the robot body 110 from the robot control equipment 200, the operation terminal 400 transitions the screen on the presenter 420 to, for example, a robot teaching screen ID32 as shown in FIG. 13. Upon receiving a response indicating approval for teaching to the moving equipment 120 from the robot control equipment 200, the operation terminal 400 transitions the screen on the presenter 420 to, for example, a moving equipment teaching screen ID33 as shown in FIG. 14. FIG. 13 shows one example of the robot teaching screen displayed on the operation terminal 400, and FIG. 14 shows one example of the moving equipment teaching screen displayed on the operation terminal 400.

The operation terminal 400 may be configured to, at any timing, receive an input to transition to the teaching target selection screen ID31 and execute the transition. For example, while the robot 100 is playing back an action that has been taught, the operation terminal 400 may transition to the teaching target selection screen ID31. For example, in a state where the robot 100 is stopped or temporarily stopped, the operation terminal 400 may be configured to transition to the teaching target selection screen ID31. Alternatively, the operation terminal 400 may be configured to transition to the teaching target selection screen ID31 regardless of the state of the robot 100. After the transition, in a state where the robot 100 is stopped or temporarily stopped, the operation terminal 400 may be configured to transition to the robot teaching screen ID32 or the moving equipment teaching screen ID33.

In accordance with the transition to the robot teaching screen ID32, the operation terminal 400 shifts to the teaching mode. However, the timing of shifting to the teaching mode may be any timing after the transition to the teaching operation screen ID3. At the shift to the teaching mode, or after the shift to the teaching mode, the operation terminal 400 may transmit, to the robot control equipment 200, a command to control the robot body 110 in the teaching mode.

As a non-limiting example, in the present embodiment, as shown in FIG. 13, the operation terminal 400 displays a caller button ID32a, a motor power button ID32b, a temporary stop button ID32c, an arm speed change bar ID32d, an arm direction change bar ID32e, an end effector speed change bar ID32f, a setting button ID32g, a position of origin setting button ID32h, and a lock button ID32i on the robot teaching screen ID32. All of these elements are input elements.

As a non-limiting example, in the present embodiment, the operation terminal 400 receives operations for teaching and settings therefor, excluding manual operations of the robotic arm 111 and the end effector 112 of the robot body 110, and transmits commands to the robot control equipment 200 in accordance with the received operations and settings. The operation terminal 400 may be configured to teach relatively uncomplicated actions to the robot body 110 and the robot control equipment 200, and need not be capable of teaching complex operations to the robot body 110 and the robot control equipment 200, such as teaching using the teaching equipment 300. Examples of teaching relatively uncomplicated actions may include teaching simple actions to the robot body 110.

The caller button ID32a is a button to bring the screen on the presenter 420 back to the teaching target selection screen ID31, and has the same functionality as that of the previously described caller buttons.

The motor power button ID32b indicates whether the power to the servomotors 113 of the robot body 110 is in the ON state or the OFF state. The operation terminal 400 may receive an input to the motor power button ID32b. The motor power button ID32b on the operation terminal 400 may have the same functionality as the previously exemplified functionality of the motor power button ID24e on the moving equipment operation screen ID24. In accordance with an input to the motor power button ID32b, the operation terminal 400 may turn ON or OFF the power to the servomotors 113.

The temporary stop button ID32c is a button to temporarily stop the action of the robot body 110. The temporary stop button ID32c on the operation terminal 400 has the same functionality as the previously exemplified functionality of the temporary stop button ID24d on the moving equipment operation screen ID24.

The arm speed change bar ID32d is a bar to set and display the action speed of the robotic arm 111. The arm speed change bar ID32d on the operation terminal 400 has the same functionality as the previously exemplified functionality of the monitor speed change bar ID24i on the moving equipment operation screen ID24.

The arm direction change bar ID32e is a bar to set and display a facing direction of the robotic arm 111. For example, the arm direction change bar ID32e may be a bar to set and display an azimuth, i.e., a facing direction in the horizontal direction, of the robotic arm 111. The arm direction change bar ID32e includes an annular bar and a point that is slidable along the annular bar. The operation terminal 400 receives an input on the point of the arm direction change bar ID32e. In response to the point being slid along the bar, the operation terminal 400 changes the azimuth. For example, the input and slide may be a slide performed in a tapped state. Based on the position of the point on the bar, the operation terminal 400 determines the azimuth, and displays the determined azimuth.

The end effector speed change bar ID32f is a bar to set and display the action speed of the end effector 112. The end effector speed change bar ID32f on the operation terminal 400 has the same functionality as the previously exemplified functionality of the monitor speed change bar ID24i on the moving equipment operation screen ID24.

The setting button ID32g is a button to open a manual operation setting screen ID321 to set a manual operation of the robot body 110. Upon receiving a predetermined input, such as a tap input, on the setting button ID32g, the operation terminal 400 transitions the screen on the presenter 420 to the manual operation setting screen ID321.

The position of origin setting button ID32h is a button to set a position of origin of the robot body 110. Upon receiving a predetermined input, such as a tap input, on the position of origin setting button ID32h, the operation terminal 400 determines a position of origin of the robot body 110 which includes the position and orientation of the robot body 100 at the timing of receiving the input. The operation terminal 400 stores the determined position of origin as teaching data. For example, the position and orientation of the robot body 110 may be the position and orientation of the end effector 112. The aforementioned timing may be a timing during an action of the robot body 110, or may be a timing during a temporary stop of the robot body 110.

The lock button ID32i is a button that indicates a locked state and an unlocked state. The locked state is a state of not allowing receiving inputs to the input elements on the robot teaching screen ID32, whereas the unlocked state is a state of allowing receiving inputs to the input elements. The lock button ID32i on the operation terminal 400 has the same functionality as the previously exemplified functionality of the lock button ID22c on the robot operation screen ID22. When the operation terminal 400 is in the locked state, the operation terminal 400 may not allow receiving inputs to any of the input elements except the lock button ID32i, or may not allow receiving inputs to some of the input elements. For example, the some of the input elements may be those relating to performing an action of the robot body 110, such as the motor power button ID32b, the temporary stop button ID32c, the arm speed change bar ID32d, the arm direction change bar ID32e, and the end effector speed change bar ID32f.

In accordance with the transition to the moving equipment teaching screen ID33, the operation terminal 400 shifts to the teaching mode. However, the timing of shifting to the teaching mode may be any timing after the transition to the teaching operation screen ID3. At the shift to the teaching mode, or after the shift to the teaching mode, the operation terminal 400 may transmit, to the robot control equipment 200, a command to control the moving equipment 120 in the teaching mode.

As a non-limiting example, in the present embodiment, as shown in FIG. 14, the operation terminal 400 displays a caller button ID33a, a motor power button ID33b, a travel speed change bar ID33c, a manual operation key ID33d, a monitor button ID33e, a movement width button ID33f, a setting button ID33g, a position of origin setting button ID33h, and a lock button ID33i on the moving equipment teaching screen ID33. All of these elements are input elements.

As a non-limiting example, in the present embodiment, the operation terminal 400 receives operations for teaching and settings therefor, including manual operations of the moving equipment 120, and transmits commands to the robot control equipment 200 in accordance with the received operations and settings.

The caller button ID33a is a button to bring the screen on the presenter 420 back to the teaching target selection screen ID31, and has the same functionality as that of the previously described caller buttons.

The motor power button ID33b indicates whether the power to the servomotor 122 of the moving equipment 120 is in the ON state or the OFF state. The operation terminal 400 may receive an input to the motor power button ID33b. The motor power button ID33b on the operation terminal 400 has the same functionality as the previously exemplified functionality of the motor power button ID24e on the moving equipment operation screen ID24, and in accordance with an input to the motor power button ID33b, the operation terminal 400 may turn ON or OFF the power to the servomotor 122.

The travel speed change bar ID33c is a bar to set and display the action speed of the moving equipment 120. The travel speed change bar ID33c on the operation terminal 400 has the same functionality as the previously exemplified functionality of the monitor speed change bar ID24i on the moving equipment operation screen ID24.

The manual operation key ID33d is a key to input a command or the like to cause the moving equipment 120 to perform a manually-controlled action in accordance with a manual operation. As a non-limiting example, in the present embodiment, the manual operation key ID33d includes four keys to give a "forward travel" command, a "backward travel" command, a "left turning" command, and a "right turning" command, respectively. On the moving equipment teaching screen ID33, these keys are located around the model of the moving equipment 120. For example, the operation terminal 400 may be configured to concurrently receive inputs to one or more keys among the four keys. While receiving inputs to the one or more keys, the operation terminal 400 keeps transmitting, to the robot control equipment 200, operation commands to cause the moving equipment 120 to perform actions corresponding to the one or more keys. Consequently, the moving equipment 120 continues performing the actions. For example, the operation terminal 400 may transmit, to the robot control equipment 200, an operation command to change the speed of an action corresponding to a key in accordance with a particular input to the key, such as the number of times of tapping on the key per predetermined time, the number of times of swiping the key per predetermined time, swiping direction, swiping distance, etc.

The monitor button ID33e is a button to open a moving equipment monitor screen ID331, which indicates the state of the moving equipment 120. Upon receiving a predetermined input, such as a tap input, on the monitor button ID33e, the operation terminal 400 transitions the screen on the presenter 420 to the moving equipment monitor screen ID331.

The movement width button ID33f is a button to open a movement width setting screen ID332 to set a movement amount of the moving equipment 120, the movement amount corresponding to an input amount to the manual operation key ID33d. Upon receiving a predetermined input, such as a tap input, on the movement width button ID33f, the operation terminal 400 transitions the screen on the presenter 420 to the movement width setting screen ID332.

The setting button ID33g is a button to open a manual operation setting screen ID333 to set a manual operation of the moving equipment 120. Upon receiving a predetermined input, such as a tap input, on the setting button ID33g, the operation terminal 400 transitions the screen on the presenter 420 to the manual operation setting screen ID333.

The position of origin setting button ID33h is a button to set a position of origin of the moving equipment 120. Upon receiving a predetermined input, such as a tap input, on the position of origin setting button ID33h, the operation terminal 400 determines a position of origin of the moving equipment 120 which includes the position and orientation of the moving equipment 120 at the timing of receiving the input. The operation terminal 400 stores the determined position of origin as teaching data. The aforementioned timing may be a timing during an action of the moving equipment 120, or may be a timing during a temporary stop of the moving equipment 120.

The lock button ID33i is a button that indicates a locked state and an unlocked state. The locked state is a state of not allowing receiving inputs to the input elements on the moving equipment teaching screen ID33, whereas the unlocked state is a state of allowing receiving inputs to the input elements. The lock button ID33i on the operation terminal 400 has the same functionality as the previously exemplified functionality of the lock button ID22c on the robot operation screen ID22. When the operation terminal 400 is in the locked state, the operation terminal 400 may not allow receiving inputs to any of the input elements except the lock button ID33i, or may not allow receiving inputs to some of the input elements. Examples of the some of the input elements may include input elements relating to performing an action of the moving equipment 120, such as the motor power button ID33b, the travel speed change bar ID33c, and the manual operation key ID33d.

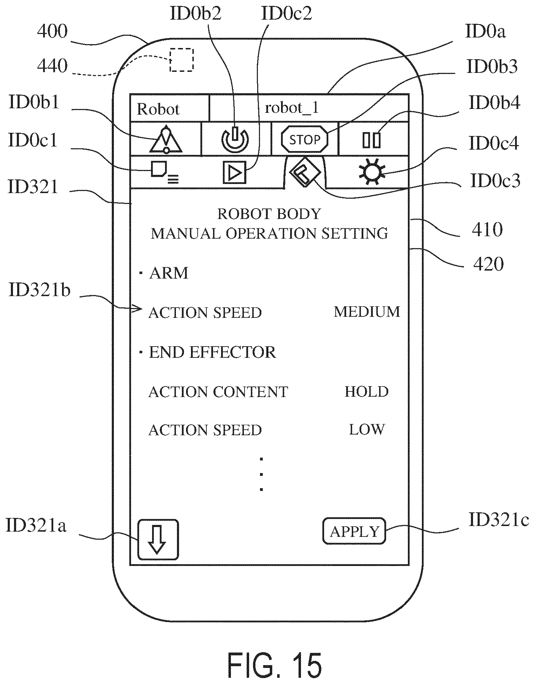

FIG. 15 shows one example of the manual operation setting screen for the robot body 110, which is displayed on the operation terminal 400. As a non-limiting example, in the present embodiment, as shown in FIG. 15, the operation terminal 400 displays a caller button ID321a, a setting item field ID321b, and an apply button iD321c on the manual operation setting screen ID321. All of these elements are input elements.

The caller button ID321a is a button to bring the screen on the presenter 420 back to the robot teaching screen ID32, and has the same functionality as that of the previously described caller buttons.

The setting item field ID321b displays setting items relating to the manual operation of the robot body 110. Through inputs to the manual operation setting screen ID321, the operation terminal 400 receives, for example, additions, deletions, and changes to the setting items displayed in the setting item field ID321b.

The apply button iD321c is a button to apply the settings displayed in the setting item field ID321b to the manual operation of the robot body 110. Upon receiving a predetermined input, such as a tap input, on the apply button iD321c, the operation terminal 400 may determine the settings displayed in the setting item field ID321b as the settings for the manual operation of the robot body 110. The operation terminal 400 may store the determined settings, and may transmit the determined settings to the robot control equipment 200.

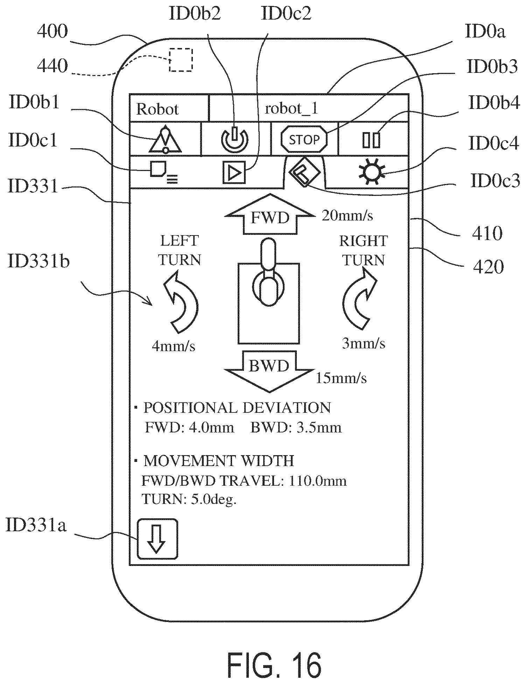

FIG. 16 shows one example of the moving equipment monitor screen for the moving equipment 120, which is displayed on the operation terminal 400. As a non-limiting example, in the present embodiment, as shown in FIG. 16, the operation terminal 400 displays a caller button ID331a and a state field 331b on the moving equipment monitor screen ID331. The caller button ID331a is an input element.

The caller button ID331a is a button to bring the screen on the presenter 420 back to the moving equipment teaching screen ID33, and has the same functionality as that of the previously described caller buttons.

The state field 331b displays items relating to the state of the moving equipment 120. For example, the state field 331b displays items relating to the state of an action of the moving equipment 120 and items set for manual operation. For example, those displayed in the state field 331b may include: the speed of the moving equipment 120 in an action direction corresponding to the manual operation key ID33d; the amount of positional deviation of the moving equipment 120 from the magnetic material line, which is a travel route; and a movement width set for the moving equipment 120.

The operation terminal 400 may indicate, in the state field 331b, a command value or target value of the speed of the moving equipment 120 and the current value of the speed of the moving equipment 120. The operation terminal 400 may determine the command value of the speed based on an input content received via the manual operation key ID33d, and may calculate the current value of the speed based on the rotation amount of the servomotor 122 received from the robot control equipment 200. The operation terminal 400 may obtain the target value of the speed from teaching data.

The operation terminal 400 may be configured to display, in the state field 331b, a result of detection by the position detector 123. Based on robot information about the robot 100, which is received from the robot control equipment 200, the operation terminal 400 may detect a deviation of the moving equipment 120 from a predetermined track. Examples of the predetermined track may include a target track included in the teaching data and the magnetic material line.

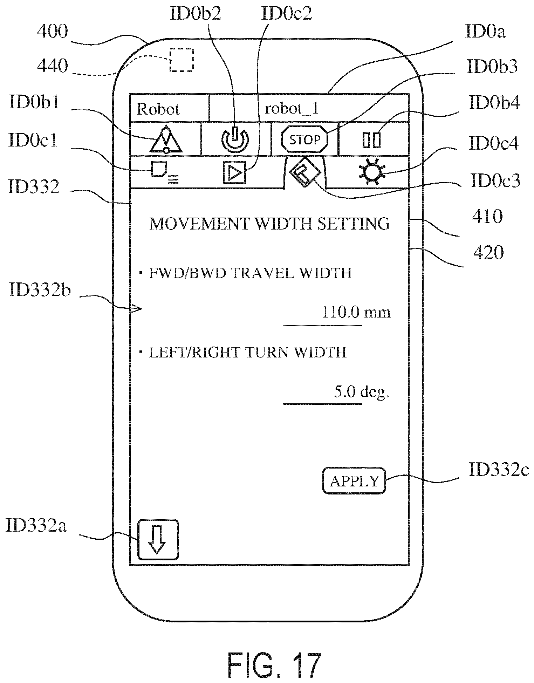

FIG. 17 shows one example of the movement width setting screen for the moving equipment 120, which is displayed on the operation terminal 400. As a non-limiting example, in the present embodiment, as shown in FIG. 17, the operation terminal 400 displays a caller button ID332a, a setting item field ID332b, and an apply button ID332c on the movement width setting screen ID332. All of these elements are input elements.

The caller button ID332a is a button to bring the screen on the presenter 420 back to the moving equipment teaching screen ID33, and has the same functionality as that of the previously described caller buttons.

The setting item field ID332b displays movement width setting items relating to the manual operation of the moving equipment 120. The movement width is also called an inching width. The movement width may indicate a movement amount of the moving equipment 120 per input, e.g., per tap, on the manual operation key ID33d, or may indicate a movement amount of the moving equipment 120 per continuous input for a predetermined time to the manual operation key ID33d, or may indicate both of them. In this example, the movement width displayed in the setting item field ID332b includes a forward/backward travel distance and a left/right turning angle. Through inputs to the movement width setting screen ID332, the operation terminal 400 receives changes to the movement width numerical values displayed in the setting item field ID332b.

The apply button ID332c is a button to apply the movement width displayed in the setting item field ID332b to the manual operation of the moving equipment 120. Upon receiving a predetermined input, such as a tap input, on the apply button ID332c, the operation terminal 400 may determine the movement width displayed in the setting item field ID332b as the movement width for the manual operation of the moving equipment 120. The operation terminal 400 may store the determined movement width, and may transmit the determined movement width to the robot control equipment 200. For example, at the time of performing the manual operation, the operation terminal 400 may generate an operation command by using an input content to the manual operation key ID33d and the movement width, and may transmit the generated operation command to the robot control equipment 200.

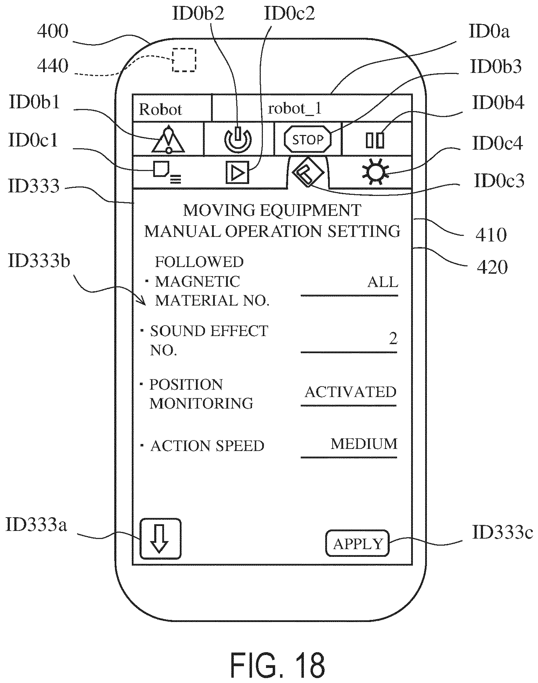

FIG. 18 shows one example of the manual operation setting screen for the moving equipment 120, which is displayed on the operation terminal 400. As a non-limiting example, in the present embodiment, as shown in FIG. 18, the operation terminal 400 displays a caller button ID333a, a setting item field ID333b, and an apply button ID333c on the manual operation setting screen ID333. All of these elements are input elements.

The caller button ID333a is a button to bring the screen on the presenter 420 back to the moving equipment teaching screen ID33, and has the same functionality as that of the previously described caller buttons.

The setting item field ID333b displays setting items relating to the manual operation of the moving equipment 120. Through inputs to the manual operation setting screen ID333, the operation terminal 400 receives, for example, additions, deletions, and changes to the setting items displayed in the setting item field ID333b. As a non-limiting example, in the present embodiment, the setting item field ID333b displays: the numbers of respective magnetic material lines for the moving equipment 120 to follow; a sound effect, such as a melody to be played during an action of the moving equipment 120; activation or inactivation of position monitoring of the moving equipment 120, the position monitoring not using the magnetic material lines; and the action speed of the moving equipment 120. The position monitoring may be one that uses the function of the position detector 123, which has a function other than detecting the magnetic material lines. Alternatively, the position monitoring may be one that uses an external device.

The apply button ID333c is a button to apply the settings displayed in the setting item field ID333b to the manual operation of the moving equipment 120. Upon receiving a predetermined input, such as a tap input, on the apply button ID333c, the operation terminal 400 may determine the settings displayed in the setting item field ID333b as the settings for the manual operation of the moving equipment 120. The operation terminal 400 may store the determined settings, and may transmit the determined settings to the robot control equipment 200.

### <Operations for the settings of the operation terminal>

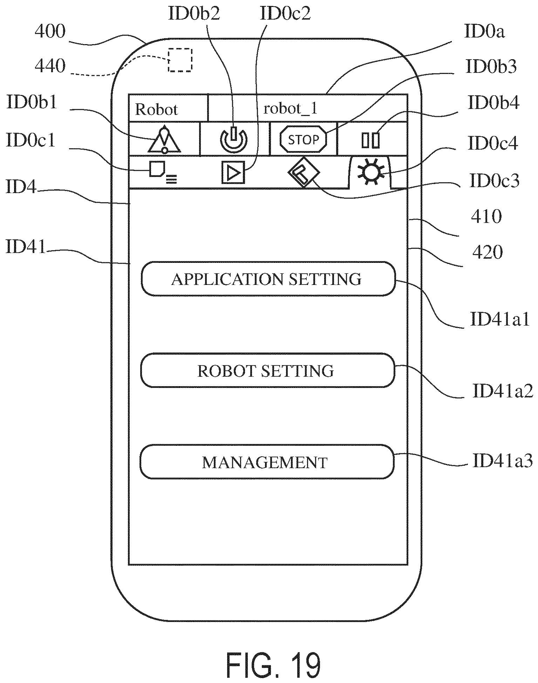

Upon receiving a predetermined input on the setting tab ID0c4, the operation terminal 400 transitions the screen on the presenter 420 to, for example, one of the setting screens ID4 as shown in FIG. 19. FIG. 19 shows one example of a setting selection screen that is one of the setting screens ID4 to be displayed on the operation terminal 400. Upon receiving a predetermined input, such as a tap input, on the setting tab ID0c4 while the setting screen ID4 is being displayed, the operation terminal 400 may transition the screen on the presenter 420 to the home screen ID0.

As a non-limiting example, in the present embodiment, the operation terminal 400 displays selection buttons ID41a1 to ID41a3 on a setting selection screen ID41. The selection buttons ID41a1 to ID41a3 indicate respective setting options. The selection button ID41a1 is a button to select the settings of the robot operation application of the operation terminal 400. The selection button ID41a2 is a button to select the settings of a robot. The robot may be a robot registered in the operation terminal 400, or may be a robot connected to the operation terminal 400. The robot may be the actual robot 100, or may be the virtual robot. The selection button ID41a3 is a button to select the management of the operation terminal 400.

Upon receiving a predetermined input, such as a tap input, on the selection button ID41a1, the operation terminal 400 transitions the screen on the presenter 420 to an application setting screen ID42. Upon receiving a predetermined input on the selection button ID41a2, the operation terminal 400 transitions the screen on the presenter 420 to a robot selection screen ID43. Upon receiving a predetermined input on the selection button ID41a3, the operation terminal 400 transitions the screen on the presenter 420 to a management screen ID44.

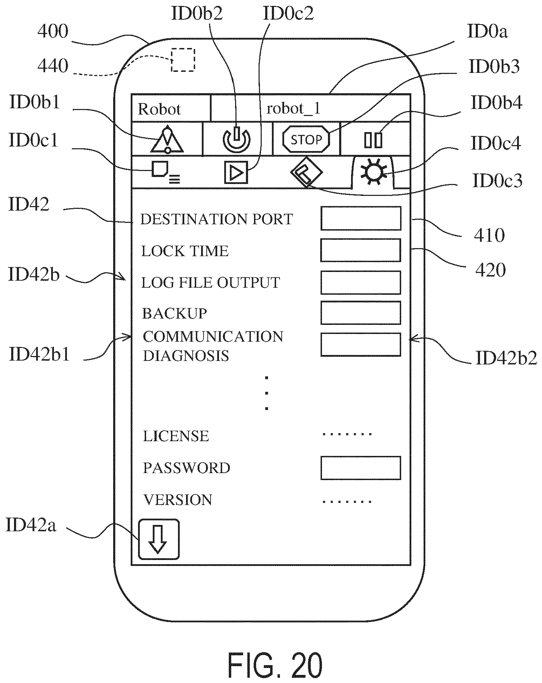

Specifically, upon receiving a predetermined input on the selection button ID41a1, the operation terminal 400 displays, for example, the application setting screen ID42 as shown in FIG. 20. FIG. 20 shows one example of the application setting screen, which is one of the setting screens ID4 to be displayed on the operation terminal 400. As a non-limiting example, in the present embodiment, the operation terminal 400 displays a caller button ID42a and a setting field ID42b on the application setting screen ID42. Both of these elements are input elements.

The caller button ID42a is a button to bring the screen on the presenter 420 back to the setting selection screen ID41, and has the same functionality as that of the previously described caller buttons.

The setting field ID42b includes: various setting items ID42b 1 of the robot operation application; and setting contents ID42b2 of the respective setting items ID42b1. Through inputs to the application setting screen ID42, the operation terminal 400 receives, for example, additions, deletions, and changes to the setting contents ID42b2. For example, in FIG. 20, the setting items 42ba include a transmission destination port, a lock time that is a time to elapse before the screen turns into the locked state, a log file output destination, backup means, presence or absence of communication diagnosis, the license state of the application, a password, the version of the application, etc.

For example, the setting items ID42b1 may include items for setting a language, a working folder path, a display updating time of the presenter 420, a watchdog error time, the number of watchdog tries, etc. The watchdog may be a bi-directional watchdog between the operation terminal 400 and the robot control equipment 200, or may be, for example, a watchdog from the operation terminal 400 to the robot control equipment 200.

The watchdog error time is a criterion for determining a watchdog request error. For example, the watchdog error time may be a non-response time of the robot control equipment 200 that continues after the transmission of a watchdog request from the operation terminal 400 to the robot control equipment 200. The number of watchdog tries is a criterion for determining a watchdog failure. For example, the number of watchdog tries may be the number of times the watchdog request is to be repeated to get a response from the robot control equipment 200 in a case where a watchdog request error has occurred. In a case where the number of times the request has been transmitted from the operation terminal 400 to the robot control equipment 200 has exceeded the number of watchdog tries and there is still no response from the robot control equipment 200, it is determined that a watchdog failure has occurred.

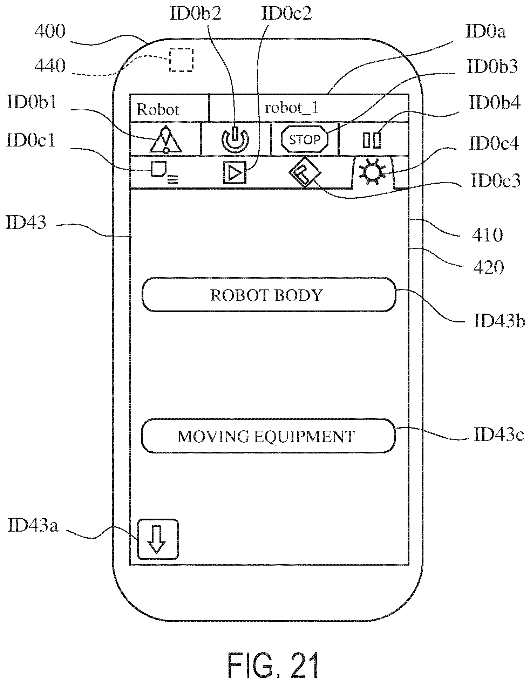

With reference to FIG. 19, upon receiving a predetermined input on the selection button ID41a2, the operation terminal 400 display, for example, the robot selection screen ID43 as shown in FIG. 21. FIG. 21 shows one example of the robot selection screen, which is one of the setting screens ID4 to be displayed on the operation terminal 400. As a non-limiting example, in the present embodiment, the operation terminal 400 displays a caller button ID43a and selection buttons ID43b and ID43c on the robot selection screen ID43. All of these elements are input elements.

The caller button ID43a is a button to bring the screen on the presenter 420 back to the setting selection screen ID41, and has the same functionality as that of the previously described caller buttons.

The selection button ID43b is a button to select the settings of the robot body, and the selection button ID43c is a button to select the settings of the moving equipment. Upon receiving a predetermined input, such as a tap input, on the selection button ID43b, the operation terminal 400 transitions the screen on the presenter 420 to a robot body setting screen ID431. Upon receiving a predetermined input, such as a tap input, on the selection button ID43c, the operation terminal 400 transitions the screen on the presenter 420 to a moving equipment setting screen ID432.

In the present embodiment, the operation terminal 400 displays the selection button ID43b, which is a button to select the robot body 110 of the actual robot 100 connected to the operation terminal 400, and the selection button ID43c, which is a button to select the moving equipment 120 of the robot 100. For example, in a case where settings for the robots that are registered in the operation terminal 400 can be made by the operation terminal 400, the operation terminal 400 may be configured to display a screen to select, from among the registered robots, a robot for which the settings are to be made. The displayed screen may be, for example, a screen similar to the connection setting screen ID1.

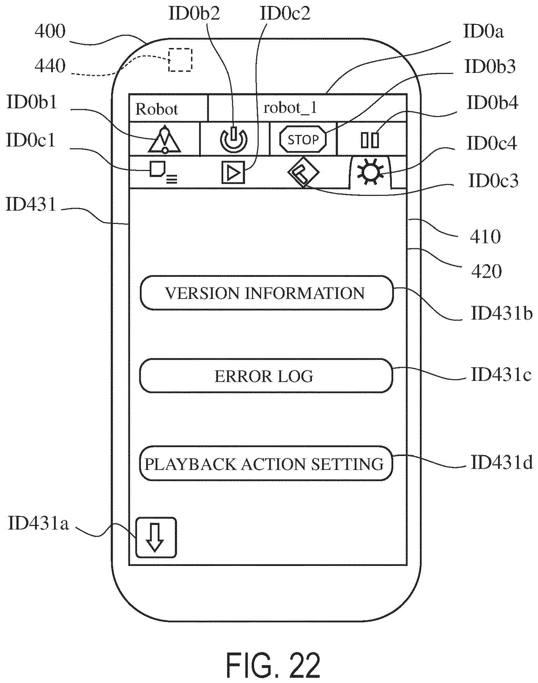

FIG. 22 shows one example of the robot body setting screen, which is one of the setting screens ID4 to be displayed on the operation terminal 400. As a non-limiting example, in the present embodiment, the operation terminal 400 displays a caller button ID43 1a, a version button ID431b, an error log button ID431c, and a playback action setting button ID431d on the robot body setting screen ID431. All of these elements are input elements.

The caller button ID431a is a button to bring the screen on the presenter 420 back to the robot selection screen ID43, and has the same functionality as that of the previously described caller buttons.

The version button ID43 1b is a button to display version information about the robot body 110. Upon receiving a predetermined input, such as a tap input, on the version button ID431b, the operation terminal 400 transitions the screen on the presenter 420 to a screen that displays the version information about the robot body 110. The screen may display information, such as software to control the robot body 110, the number of servomotors, the types of the servomotors, etc. The screen may further display other information, such as software of the operation terminal 400, the model thereof, etc.

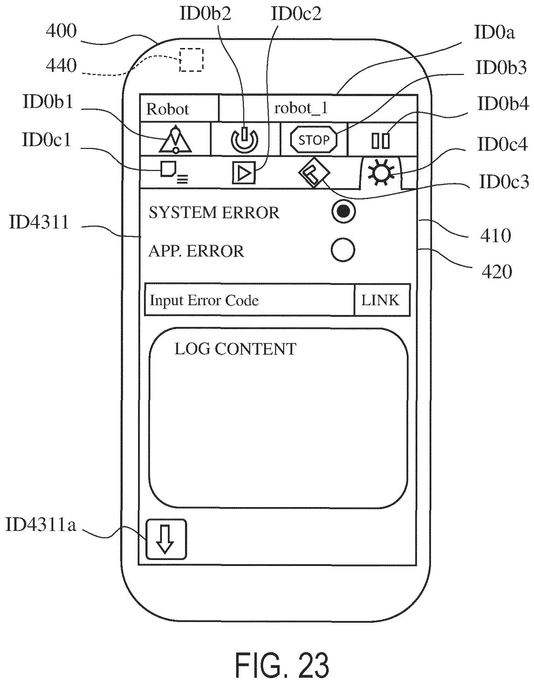

The error log button ID431c is a button to obtain an error log. Upon receiving a predetermined input, such as a tap input, on the error log button ID431c, the operation terminal 400 transitions the screen on the presenter 420 to, for example, an error log screen ID4311 to obtain an error log as shown in FIG. 23. FIG. 23 shows one example of the error log screen, which is one of the setting screens ID4 to be displayed on the operation terminal 400. Through inputs on the error log screen ID4311, the operation terminal 400 makes it possible to selectively obtain one of two system error logs that are an error log of the robot system 1 and an error log of the robot operation application. For each of the errors in the two systems, the operation terminal 400 receives an input of an error code to make it possible to search out an error log corresponding to the error code. The operation terminal 400 displays the contents of the error log that has been searched out. The operation terminal 400 displays a caller button ID4311a on the error log screen ID4311. The caller button ID4311a is a button to bring the screen on the presenter 420 back to the robot body setting screen ID431, and has the same functionality as that of the previously described caller buttons.

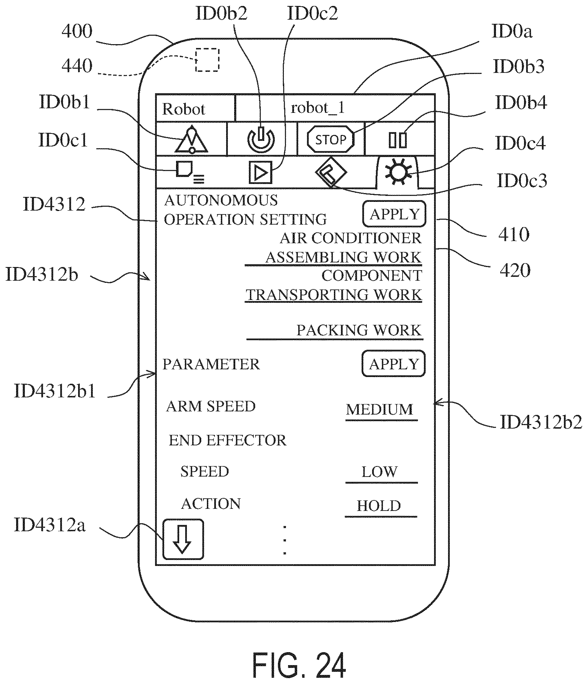

Returning to FIG. 22, the playback action setting button ID431d is a button to make settings for a playback action of the robot body 110. Upon receiving a predetermined input, such as a tap input, on the playback action setting button ID431d, the operation terminal 400 transitions the screen on the presenter 420 to, for example, a playback action setting screen ID4312 as shown in FIG. 24. FIG. 24 shows one example of the playback action setting screen for the robot body 110, which is one of the setting screens ID4 to be displayed on the operation terminal 400. As a non-limiting example, in the present embodiment, the operation terminal 400 displays a caller button ID4312a and a setting field ID4312b on the playback action setting screen ID4312. Both of these elements are input elements.

The caller button ID4312a is a button to bring the screen on the presenter 420 back to the robot body setting screen ID431, and has the same functionality as that of the previously described caller buttons. The setting field ID4312b includes various setting items ID4312b1 relating to the playback action of the robot body 110 and setting contents ID4312b2 of the respective setting items ID4312b1. Through inputs to the playback action setting screen ID4312, the operation terminal 400 receives, for example, additions, deletions, and changes to the setting contents ID4312b2.

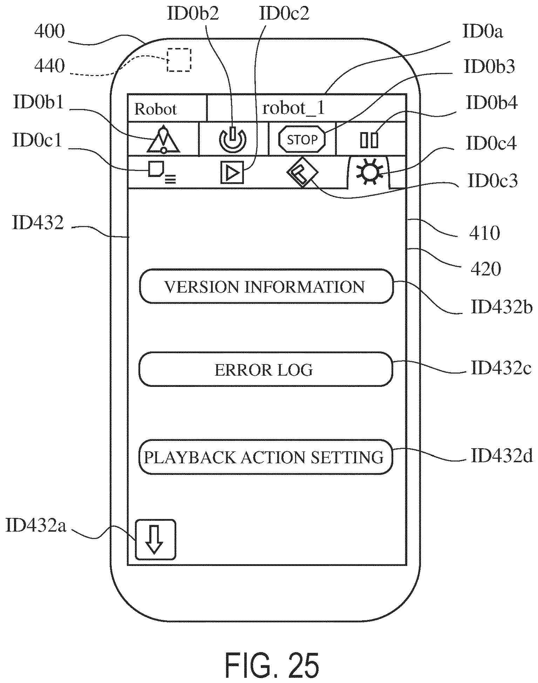

FIG. 25 shows one example of the moving equipment setting screen, which is one of the setting screens ID4 to be displayed on the operation terminal 400. As a non-limiting example, in the present embodiment, the operation terminal 400 displays a caller button ID432a, a version button ID432b, an error log button ID432c, and a playback action setting button ID432d on the moving equipment setting screen ID432. All of these elements are input elements.

The caller button ID432a is a button to bring the screen on the presenter 420 back to the robot selection screen ID43, and has the same functionality as that of the previously described caller buttons.

The version button ID432b is a button to display version information about the moving equipment 120. Upon receiving a predetermined input, such as a tap input, on the version button ID432b, the operation terminal 400 transitions the screen on the presenter 420 to a screen that displays version information about the moving equipment 120. The screen may display information, such as software to control the moving equipment 120, the number of servomotors, the types of the servomotors, etc. The screen may further display other information, such as software of the operation terminal 400, the model thereof, etc.

The error log button ID432c is a button to obtain an error log, and has the same functionality as that of the error log button ID43 1c on the robot body setting screen ID431. Upon receiving a predetermined input, such as a tap input, on the error log button ID432c, the operation terminal 400 transitions the screen on the presenter 420 to, for example, a screen similar to the error log screen ID4311 shown in FIG. 23.

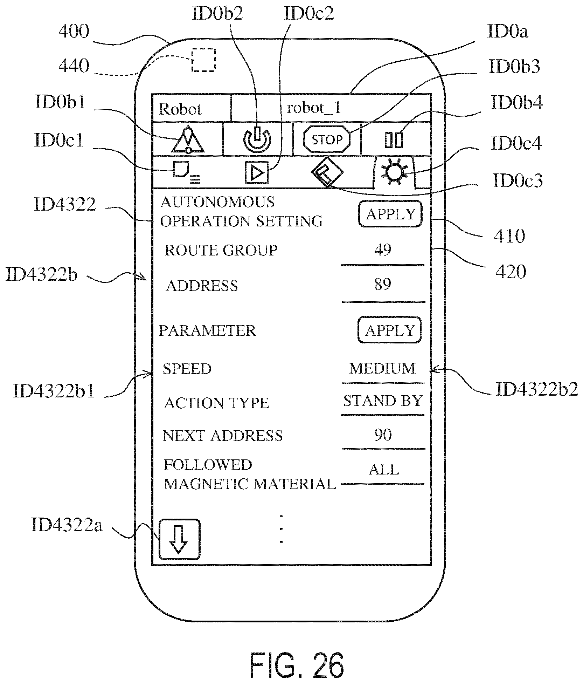

The playback action setting button ID432d is a button to make settings for a playback action of the moving equipment 120. Upon receiving a predetermined input, such as a tap input, on the playback action setting button ID432d, the operation terminal 400 transitions the screen on the presenter 420 to, for example, a playback action setting screen ID4322 as shown in FIG. 26. FIG. 26 shows one example of the playback action setting screen for the moving equipment 120, which is one of the setting screens ID4 to be displayed on the operation terminal 400. As a non-limiting example, in the present embodiment, the operation terminal 400 displays a caller button ID4322a and a setting field ID4322b on the playback action setting screen ID4322. Both of these elements are input elements.

The caller button ID4322a is a button to bring the screen on the presenter 420 back to the moving equipment setting screen ID432, and has the same functionality as that of the previously described caller buttons. The setting field ID4322b includes various setting items ID4322b1 relating to the playback action of the moving equipment 120 and setting contents ID4322b2 of the respective setting items ID4322b1. Through inputs to the playback action setting screen ID4322, the operation terminal 400 receives, for example, additions, deletions, and changes to the setting contents ID4322b2.

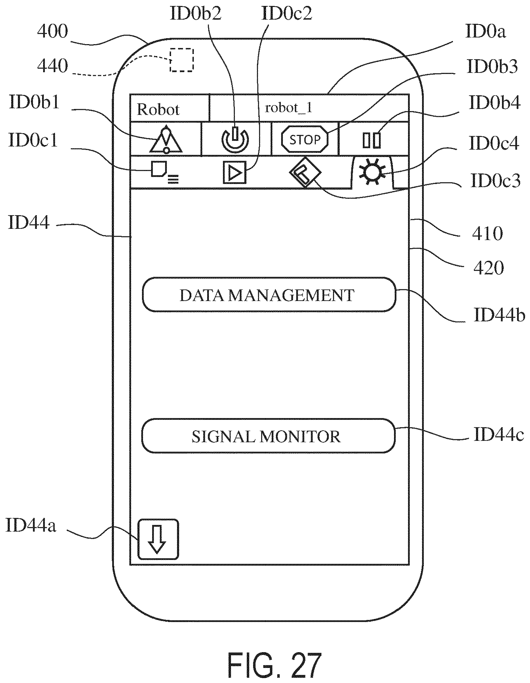

With reference to FIG. 19, upon receiving a predetermined input on the selection button ID41a3, the operation terminal 400 displays, for example, the management screen ID44 as shown in FIG. 27. FIG. 27 shows one example of the management screen, which is one of the setting screens ID4 to be displayed on the operation terminal 400. As a non-limiting example, in the present embodiment, the operation terminal 400 displays a caller button ID44a and selection buttons ID44b and ID44c on the management screen ID44. All of these elements are input elements.

The caller button ID44a is a button to bring the screen on the presenter 420 back to the setting selection screen ID41, and has the same functionality as that of the previously described caller buttons.

The selection button ID44b is a button to select data management of the operation terminal 400, and the selection button ID43c is a button to select management of input and output of signals to and from the operation terminal 400. Upon receiving a predetermined input, such as a tap input, on the selection button ID44b, the operation terminal 400 transitions the screen on the presenter 420 to a data management screen ID441. Upon receiving a predetermined input, such as a tap input, on the selection button ID44c, the operation terminal 400 transitions the screen on the presenter 420 to a signal monitor screen ID442.

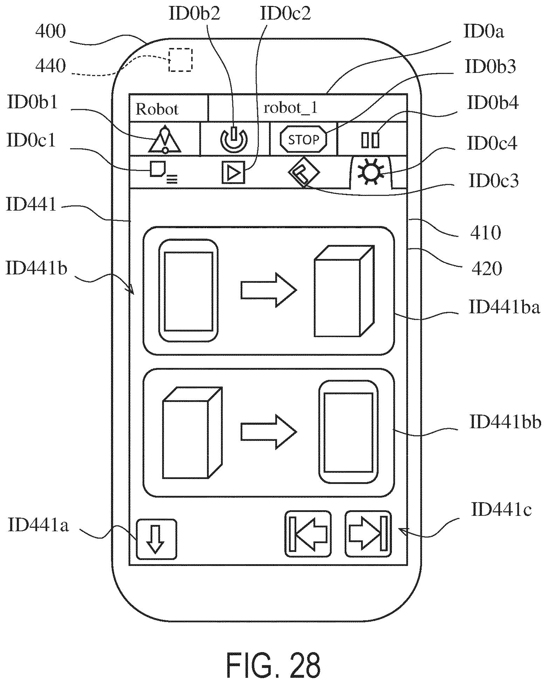

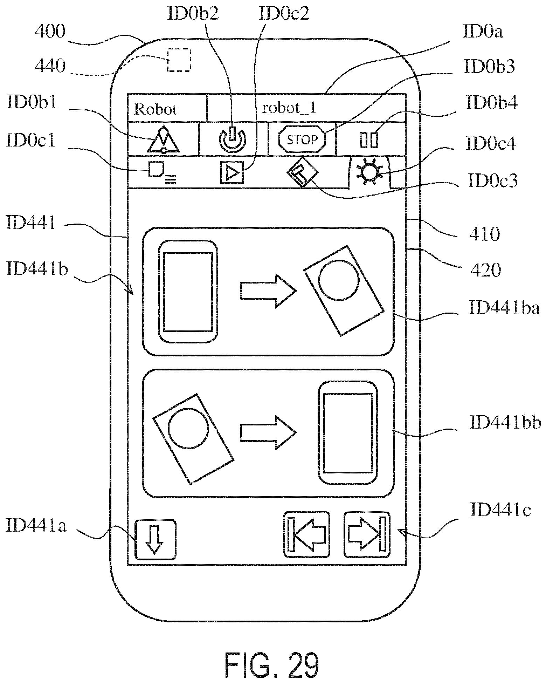

FIG. 28 and FIG. 29 each show one example of the data management screen, which is one of the setting screens ID4 to be displayed on the operation terminal 400. As a non-limiting example, in the present embodiment, the operation terminal 400 displays a caller button ID441a, a device field ID441b, and a switch button ID441c on the data management screen ID441. The caller button ID441a and the switch button ID441c are input elements.

The caller button ID441a is a button to bring the screen on the presenter 420 back to the management screen ID44, and has the same functionality as that of the previously described caller buttons.

The device field ID441b includes an output field ID441ba and an input field ID441bb. The output field ID441ba indicates a target to which the operation terminal 400 outputs data. The input field ID441bb indicates a target from which the operation terminal 400 receives a data input. In the device field ID441b shown in FIG. 28, the target indicated in each of the output field ID441ba and the input field ID441bb is the robot control equipment 200. In the device field ID441b shown in FIG. 29, the target indicated in each of the output field ID441ba and the input field ID441bb is a working folder of the operation terminal 400, i.e., a storage device. The target to which the operation terminal 400 outputs data, i.e., the output target, and the target from which the operation terminal 400 receives a data input, i.e., the input target, are not limited to the above equipment/device, but may be any equipment/device.

Upon receiving a predetermined input, such as a tap input, on the output field ID441ba, the operation terminal 400 outputs work data or the like to the output target. Upon receiving a predetermined input, such as a tap input, on the input field ID441bb, the operation terminal 400 makes a request to a request target for work data or the like. Upon obtaining the work data or the like from the request target, the operation terminal 400 may store therein the obtained work data or the like. Examples of the work data may include data obtained and generated by the operation terminal 400 during work, data obtained and generated by the request target during work, teaching data, etc.

The switch button ID441c is a button to switch the targets that are indicated in the output field ID441ba and the input field ID441bb of the device field ID441b. Upon receiving a predetermined input, such as a tap input, on the switch button ID441c, the operation terminal 400 changes combinations of the operation terminal 400 and the target, the combinations being indicated in the output field ID441ba and the input field ID441bb. The combinations may be preset and prestored in the operation terminal 400.

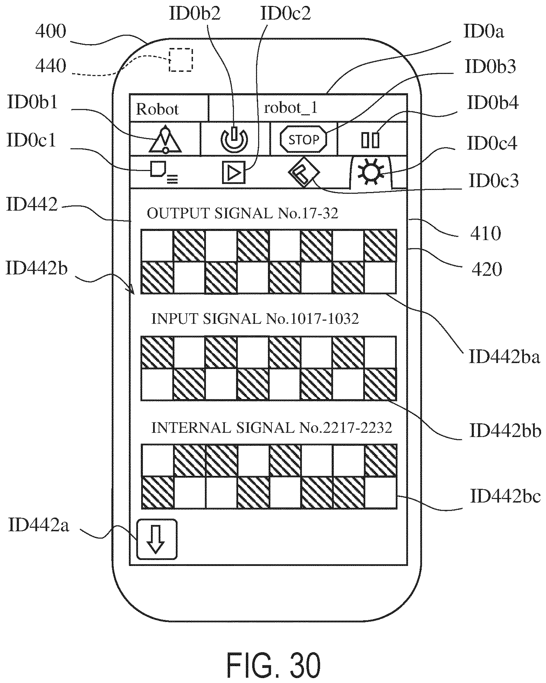

FIG. 30 shows one example of the signal monitor screen, which is one of the setting screens ID4 to be displayed on the operation terminal 400. As a non-limiting example, in the present embodiment, the operation terminal 400 displays a caller button ID442a and a signal field ID442b on the signal monitor screen ID442. The caller button ID442a is an input element.

The signal field ID442b includes: a signal field ID442ba, which indicates the state of output signals from the operation terminal 400 to the robot control equipment 200; a signal field ID442bb, which indicates the state of input signals from the robot control equipment 200 to the operation terminal 400; and a signal field ID442bc, which indicates the state of internal signals of the operation terminal 400. During the signal monitor screen ID442 being displayed, the processor P of the operation terminal 400 outputs a command requesting the states of the respective signals, and obtains the states of the respective signals.

### (Other Embodiments)

Although the illustrative embodiment of the present disclosure has been described as above, the present disclosure is not limited to the above-described illustrative embodiment. That is, various modifications and improvements can be made within the scope of the present disclosure. For example, embodiments obtained by making various modifications to the illustrative embodiment, and embodiments obtained by combining components of different illustrative embodiments, also fall within the scope of the present disclosure.

For example, in the embodiment, the operation terminal 400 is configured to be connected to one piece of robot control equipment 200. However, this is a non-limiting example. The operation terminal 400 may be connected to two or more pieces of robot control equipment 200 concurrently. The operation terminal 400 may be configured to, in parallel, transmit and receive commands, information, data, etc. to and from all of the two or more pieces of robot control equipment 200. The operation terminal 400 may be configured to select at least one piece of robot control equipment 200 from among the two or more pieces of robot control equipment 200, and to, in parallel, transmit and receive commands, information, data, etc. to and from the at least one piece of robot control equipment 200. The operation terminal 400 may be configured to select one piece of robot control equipment 200 from among the two or more pieces of robot control equipment 200, and to transmit and receive commands, information, data, etc. to and from the one piece of robot control equipment 200.

Hereinafter, exemplary technical aspects of the present disclosure are described. An operation terminal according to one aspect of the present disclosure is an operation terminal for operating a mobile robot. The operation terminal performs: receiving an input of a moving operation that is an operation to cause moving equipment included in the robot to perform an action; and outputting, to control equipment that controls an action of the robot, a command to cause the moving equipment to perform the action in accordance with the received moving operation.

According to the above aspect, with the operation terminal, an operation of the moving equipment of the robot can be performed. Performing an operation of the moving equipment of the robot is causing the robot to perform a particular action. A manual operation of the moving equipment of the robot is simpler than a manual operation of a robot body such as a robotic arm. For example, in a case where the moving equipment is traveling equipment that travels on a supporting surface, a manual operation of the moving equipment may be even simpler. A smart device such as a tablet may be used as the operation terminal, and the use of the smart device can make the operation even further simpler. There is a case where an operator to perform a manual operation of the moving equipment need not receive special training unlike a teaching operation of the robot body. Therefore, the operation terminal makes it possible for various operators to perform an operation to cause the robot to perform a particular action.

The operation terminal according to the above one aspect of the present disclosure may selectively shift between a locked state and an unlocked state, the locked state being a state of not allowing receiving an input of an operation to cause the robot to perform an action, the unlocked state being a state of allowing receiving an input to cause the robot to perform an action. When the operation terminal is in the locked state, upon receiving an input of an unlocking operation, the operation terminal may shift to the unlocked state. According to this aspect, the operation terminal makes it possible to reduce receiving unintentional inputs made by the operator. Therefore, the operation terminal makes it possible to reduce incorrect actions of the robot.

When the operation terminal according to the above one aspect of the present disclosure is in the unlocked state, if a state of receiving no input of an operation has continued for a predetermined time, the operation terminal may shift to the locked state. According to this aspect, in a case where the state of receiving no input continues, the operation terminal can reduce receiving, from the surrounding environment, unnecessary inputs that are made as a result of the operation terminal coming into contact with the surrounding environment, such as the surrounding physical objects. Therefore, the operation terminal makes it possible to reduce incorrect actions of the robot.

The operation terminal according to the above one aspect of the present disclosure may include a display. The operation terminal may perform: outputting a request for robot information to the control equipment, the robot information being information indicating a state of the robot; and upon receiving the robot information from the control equipment, displaying the robot information on the display.

According to the above aspect, the operation terminal can request the control equipment for robot information, and display the robot information obtained from the control equipment in such a manner that the robot information is visible to the operator. This makes it possible for the operator to readily and surely perform an operation of the moving equipment via the operation terminal.

The operation terminal according to the above one aspect of the present disclosure may receive the input of the moving operation in a case where the robot performs an action that has been taught to the robot in advance.

According to the above aspect, when the robot is autonomously performing the action that has been taught, the operation terminal can operate the moving equipment. For example, in a case where the position of the robot has deviated from a position that accords with the taught action due to an external disturbance such as a contact with the surrounding environment, the operator can correct the position of the robot by operating the moving equipment via the operation terminal. The operation terminal makes it possible for various operators to perform such a correction operation.

The operation terminal according to the above one aspect of the present disclosure may perform: outputting, to the control equipment, a command to operate in a teaching mode to teach a predetermined action to the moving equipment; receiving the input of the moving operation in the teaching mode; and outputting, to the control equipment, a command to cause the moving equipment to perform the action in accordance with the received moving operation.

According to the above aspect, the operation terminal makes it possible to execute the teaching mode to teach the moving equipment and to operate the moving equipment in the teaching mode. Thus, an action can be taught to the moving equipment by using the operation terminal.

The operation terminal according to the above one aspect of the present disclosure may perform: receiving an input of an emergency stop command to bring the moving equipment to an emergency stop; and outputting, to the control equipment, a command to cause the moving equipment to stop operation in accordance with the received emergency stop command. According to this aspect, the moving equipment can be brought to an emergency stop by using the operation terminal.

The operation terminal according to the above one aspect of the present disclosure may perform: outputting, to at least one piece of control equipment, a request for connectivity for an operation-enabled connection with the operation terminal; upon receiving a response to the request for connectivity for the operation-enabled connection from the control equipment, presenting information about the control equipment that is operable by the operation terminal; receiving an input to select the control equipment to be operated; and outputting, to the control equipment to be operated, a request for the operation-enabled connection with the operation terminal.

According to the above aspect, the operation terminal can connect to the control equipment that is selected from various pieces of control equipment. In the connecting process, the operation terminal can sequentially perform: searching for connectable control equipment; presenting a search result to the operator; and connecting to control equipment that has been selected by the operator from the search result.

The operation terminal according to the above one aspect of the present disclosure may perform: outputting, to the control equipment, a request for an operation-enabled connection with the operation terminal; and outputting, to the control equipment, a request to clearly indicate, by using the robot, establishment of the operation-enabled connection between the control equipment and the operation terminal. According to this aspect, the operation terminal can clearly indicate the establishment of the connection between the operation terminal and the control equipment by using the robot, and for example, with visual indication or the like.

A robot system according to one aspect of the present disclosure includes: at least one operation terminal according to the above one aspect of the present disclosure; at least one robot; and at least one piece of control equipment which controls an action of the at least one robot. The operation terminal is operably connected to the control equipment selected from the at least one piece of control equipment. According to this aspect, the same advantageous effects as those of the operation terminal according to the above one aspect of the present disclosure are obtained. The operation terminal can be connected to the control equipment selected from the at least one piece of control equipment.

The robot system according to the above one aspect of the present disclosure may further include at least one piece of teaching equipment communicably connected to the at least one piece of control equipment. The control equipment may operably and selectively connect to either the operation terminal or the teaching equipment. According to this aspect, the occurrence of the following situation is reduced: during teaching to the robot by using the teaching equipment, the control equipment causes the robot to perform an action in accordance with a command received from the operation terminal. As a result, incorrect actions of the robot are reduced.

A computer program according to one aspect of the present disclosure is a computer program for causing the operation terminal according to the above one aspect of the present disclosure to operate, the computer program causing the operation terminal to perform: receiving the input of the moving operation; generating an operation command to cause the moving equipment to perform the action in accordance with the received moving operation; and outputting the operation command to the control equipment. According to this aspect, the same advantageous effects as those of the operation terminal according to the above one aspect of the present disclosure are obtained.

The computer program according to the above one aspect of the present disclosure may be a program that is incorporated in the operation terminal as an application program. According to this aspect, even if the operation terminal is not a dedicated device, but, for example, a general-purpose device, the functionality of the present disclosure can be realized by incorporating the computer program into the operation terminal.

An operation terminal according to another aspect of the present disclosure is an operation terminal for operating a robot. The operation terminal is communicably connected to control equipment that controls an action of the robot. The operation terminal performs: receiving an input of an operation to cause the robot to perform an action; and outputting a command to the control equipment to cause the robot to perform the action in accordance with the received operation. The operation terminal receives a particular operation that is part of operations to cause the robot to perform actions, the operations being receivable by teaching equipment for the robot.

According to the above aspect, an operation of the robot receivable by the operation terminal is a particular operation that is part of operations, which are to cause the robot to perform actions and are receivable by the teaching equipment. The particular operation may be a simple operation that is one of the operations receivable by the teaching equipment. A smart device such as a tablet may be used as the operation terminal, and the use of the smart device can make the particular operation even simpler. There is a case where an operator to perform a simple operation need not receive special training unlike a teaching operation of the robot. Therefore, the operation terminal makes it possible for various operators to perform an operation to cause the robot to perform a particular action.

In the operation terminal according to the above other aspect of the present disclosure, the particular operation may be different from an operation to cause the robot to perform an action to perform teaching to the robot. According to this aspect, since the particular operation is different from an operation for teaching, special training for the operator to perform the particular operation can be made unnecessary, and further, the particular operation may be a simple operation. Therefore, the operation terminal makes it possible for various operators to perform an operation to cause the robot to perform a particular action.

In the operation terminal according to the above other aspect of the present disclosure, the particular operation may include an operation to cause the robot to perform an action that has been taught to the robot in advance. According to this aspect, an operation to cause the robot to autonomously perform an action that has been taught to the robot in advance may be a simple operation. This makes it possible to simplify the particular operation.

In the operation terminal according to the above other aspect of the present disclosure, the particular operation may include an operation to command the robot to return to a predetermined state that is a state of being in a position of origin. According to this aspect, the operation to command the robot to return to the state of being in the position of origin may be a simple operation. This makes it possible to simplify the particular operation.

In the operation terminal according to the above other aspect of the present disclosure, the particular operation may include an operation to command the robot to come to an emergency stop. According to this aspect, the operation to command the robot to come to an emergency stop may be a simple operation. This makes it possible to simplify the particular operation.

The operation terminal according to the above other aspect of the present disclosure may selectively shift between a locked state and an unlocked state, the locked state being a state of not allowing receiving an input of the particular operation, the unlocked state being a state of allowing receiving an input of the particular operation, and when the operation terminal is in the locked state, upon receiving an input of an unlocking operation, the operation terminal may shift to the unlocked state. According to this aspect, the operation terminal makes it possible to reduce receiving unintentional inputs made by the operator. Therefore, the operation terminal makes it possible to reduce incorrect actions of the robot.

When the operation terminal according to the above other aspect of the present disclosure is in the unlocked state, if a state of receiving no input of an operation has continued for a predetermined time, the operation terminal may shift to the locked state. According to this aspect, in a case where the state of receiving no input continues, the operation terminal can reduce the occurrence of the following situation: as a result of the robot performing an action, the robot comes into contact with the surrounding environment, for example, the surrounding physical objects, and thereby the robot receives unnecessary inputs from the surrounding environment. Therefore, the operation terminal makes it possible to reduce incorrect actions of the robot.

The operation terminal according to the above other aspect of the present disclosure may include a display. The operation terminal may perform: outputting a request for robot information to the control equipment, the robot information being information indicating a state of the robot; and upon receiving the robot information from the control equipment, displaying the robot information on the display.

According to the above aspect, the operation terminal can request the control equipment for robot information, and display the robot information obtained from the control equipment in such a manner that the robot information is visible to the operator. This makes it possible for the operator to readily and surely perform the particular operation via the operation terminal.

The operation terminal according to the above other aspect of the present disclosure may perform: outputting, to at least one piece of control equipment, a request for connectivity for an operation-enabled connection with the operation terminal; upon receiving a response to the request for connectivity for the operation-enabled connection from the control equipment, presenting information about the control equipment that is operable by the operation terminal; receiving an input to select the control equipment to be operated; and outputting, to the control equipment to be operated, a request for the operation-enabled connection with the operation terminal.

According to the above aspect, the operation terminal can connect to the control equipment that is selected from various pieces of control equipment. In the connecting process, the operation terminal can sequentially perform: searching for connectable control equipment; presenting a search result to the operator; and connecting to control equipment that has been selected by the operator from the search result.

The operation terminal according to the above other aspect of the present disclosure may perform: outputting, to the control equipment, a request for an operation-enabled connection with the operation terminal; and outputting, to the control equipment, a request to clearly indicate, by using the robot, establishment of the operation-enabled connection between the control equipment and the operation terminal. According to this aspect, the operation terminal can clearly indicate the establishment of the connection between the operation terminal and the control equipment by using the robot, and for example, with visual indication or the like.

A robot system according to another aspect of the present disclosure includes: at least one operation terminal according to the above other aspect of the present disclosure; at least one robot; and at least one piece of control equipment which controls an action of the at least one robot. The operation terminal is operably connected to the control equipment selected from the at least one piece of control equipment. According to this aspect, the same advantageous effects as those of the operation terminal according to the above other aspect of the present disclosure are obtained. The operation terminal can be connected to the control equipment selected from the at least one piece of control equipment.

The robot system according to the above other aspect of the present disclosure may further include at least one piece of teaching equipment communicably connected to the at least one piece of control equipment. The control equipment may operably connect to either the operation terminal or the teaching equipment, or to both the operation terminal and the teaching equipment. According to this aspect, the occurrence of the following situation is reduced: during teaching to the robot by using the teaching equipment, the control equipment causes the robot to perform an action in accordance with a command received from the operation terminal. As a result, incorrect actions of the robot are reduced.

A computer program according to another aspect of the present disclosure is a computer program for causing the operation terminal according to the above other aspect of the present disclosure to operate, the computer program causing the operation terminal to perform: receiving an input of the particular operation; generating an operation command to cause the robot to perform an action in accordance with the received particular operation; and outputting the operation command to the control equipment communicably connected to the operation terminal. According to this aspect, the same advantageous effects as those of the operation terminal according to the above other aspect of the present disclosure are obtained.

The computer program according to the above other aspect of the present disclosure may be a program that is incorporated in the operation terminal as an application program. According to this aspect, even if the operation terminal is not a dedicated device, but, for example, a general-purpose device, the functionality of the present disclosure can be realized by incorporating the computer program into the operation terminal.

The functionality of the elements disclosed herein may be implemented using circuitry or processing circuitry which includes general purpose processors, special purpose processors, integrated circuits, ASICs, conventional circuitry and/or combinations thereof which are configured or programmed to perform the disclosed functionality. Processors are considered processing circuitry or circuitry as they include transistors and other circuitry therein. In the present disclosure, the circuitry, units, or means are hardware that carry out or are programmed to perform the recited functionality. The hardware may be any hardware disclosed herein or otherwise known which is programmed or configured to carry out the recited functionality. When the hardware is a processor which may be considered a type of circuitry, the circuitry, means, or units are a combination of hardware and software, the software being used to configure the hardware and/or processor.

All of the numbers used herein, such as ordinal numbers and those indicating quantities, are mere examples to specifically describe the techniques of the present disclosure, and the present disclosure is not limited to those example numbers. Connection relationships between the components herein are mere examples to specifically describe the techniques of the present disclosure, and connection relationships to realize the functionality of the present disclosure are not limited to these examples.

As the present disclosure may be embodied in various forms without departing from the scope of essential characteristics thereof, the illustrative embodiments and variations are therefore illustrative and not restrictive, since the scope of the present disclosure is defined by the appended claims rather than by the description preceding them. All changes that fall within metes and bounds of the claims, or equivalence of such metes and bounds thereof are therefore intended to be embraced by the claims.

## Claims

1. An operation terminal for operating a mobile robot, wherein
the operation terminal performs:
receiving an input of a moving operation that is an operation to cause moving equipment included in the robot to perform an action; and
outputting, to control equipment that controls an action of the robot, a command to cause the moving equipment to perform the action in accordance with the received moving operation.

2. The operation terminal according to claim 1, wherein
the operation terminal selectively shifts between a locked state and an unlocked state, the locked state being a state of not allowing receiving an input of an operation to cause the robot to perform an action, the unlocked state being a state of allowing receiving an input to cause the robot to perform an action, and
when the operation terminal is in the locked state, upon receiving an input of an unlocking operation, the operation terminal shifts to the unlocked state.

3. The operation terminal according to claim 2, wherein
when the operation terminal is in the unlocked state, if a state of receiving no input of an operation has continued for a predetermined time, the operation terminal shifts to the locked state.

4. The operation terminal according to any one of claims 1 to 3, comprising a display, wherein
the operation terminal performs:
outputting a request for robot information to the control equipment, the robot information being information indicating a state of the robot; and
upon receiving the robot information from the control equipment, displaying the robot information on the display.

5. The operation terminal according to any one of claims 1 to 4, wherein
the operation terminal receives the input of the moving operation in a case where the robot performs an action that has been taught to the robot in advance.

6. The operation terminal according to any one of claims 1 to 5, wherein
the operation terminal performs:
outputting, to the control equipment, a command to operate in a teaching mode to teach a predetermined action to the moving equipment;
receiving the input of the moving operation in the teaching mode; and
outputting, to the control equipment, a command to cause the moving equipment to perform the action in accordance with the received moving operation.

7. The operation terminal according to any one of claims 1 to 6, wherein
the operation terminal performs:
receiving an input of an emergency stop command to bring the moving equipment to an emergency stop; and
outputting, to the control equipment, a command to cause the moving equipment to stop operation in accordance with the received emergency stop command.

8. The operation terminal according to any one of claims 1 to 7, wherein
the operation terminal performs:
outputting, to at least one piece of control equipment, a request for connectivity for an operation-enabled connection with the operation terminal;
upon receiving a response to the request for connectivity for the operation-enabled connection from the control equipment, presenting information about the control equipment that is operable by the operation terminal;
receiving an input to select the control equipment to be operated; and
outputting, to the control equipment to be operated, a request for the operation-enabled connection with the operation terminal.

9. The operation terminal according to any one of claims 1 to 8, wherein
the operation terminal performs:
outputting, to the control equipment, a request for an operation-enabled connection with the operation terminal; and
outputting, to the control equipment, a request to clearly indicate, by using the robot, establishment of the operation-enabled connection between the control equipment and the operation terminal.

10. A robot system comprising:
at least one operation terminal according to any one of claims 1 to 9;
at least one robot; and
at least one piece of control equipment which controls an action of the at least one robot, wherein
the operation terminal is operably connected to the control equipment selected from the at least one piece of control equipment.

11. The robot system according to claim 10, further comprising at least one piece of teaching equipment communicably connected to the at least one piece of control equipment, wherein
the control equipment operably and selectively connects to either the operation terminal or the teaching equipment.

12. A computer program for causing the operation terminal according to any one of claims 1 to 9 to operate, the computer program causing the operation terminal to perform:
receiving the input of the moving operation;
generating an operation command to cause the moving equipment to perform the action in accordance with the received moving operation; and
outputting the operation command to the control equipment.

13. The computer program according to claim 12, wherein
the computer program is a program that is incorporated in the operation terminal as an application program.
